# EUROPEAN PATENT APPLICATION

(11) **EP 4 572 356 A1**
(43) Date of publication of application: **18.06.2025**
(21) Application number: 23862294.8
(22) Date of filing: 01.09.2023
(51) Int. Cl.: H04W 12/03

(54) **NETWORK INFORMATION PROCESSING METHOD AND APPARATUS**

(30) Priority: 06.09.2022 CN 202211085584
(71) Applicant: Huawei Technologies Co., Ltd., Shenzhen, Guangdong 518129 (CN)
(72) Inventor: GUO, Longhua, Shenzhen, Guangdong 518129 (CN); WU, Rong, Shenzhen, Guangdong 518129 (CN)
(74) Representative: Goddar, Heinz J.
(86) International application number: PCT/CN2023/116532
(87) International publication number: WO 2024/051600

(57) **Abstract**

This application pertains to the field of communication technologies, and provides a network information processing method and apparatus, to ensure a service of a terminal in a multi-registration scenario, and avoid a service failure. In the method, a second network element may support the multi-registration scenario of the terminal through capability enhancement. For example, the second network element may send security information of the terminal to a third network element based on first registration information and second registration information, to support a service between the terminal and an application server, for example, ensure that service data can be securely transmitted, and avoid a service failure.

## Description

This application claims priority to Chinese Patent Application No. 202211085584.8, filed with the China National Intellectual Property Administration on September 6, 2022 and entitled "NETWORK INFORMATION PROCESSING METHOD AND APPARATUS", which is incorporated herein by reference in its entirety.

### TECHNICAL FIELD

This application relates to the communication field, and in particular, to a network information processing method and apparatus.

### BACKGROUND

An authentication and key management for applications (authentication and key management for applications, AKMA) mechanism is defined in the 3rd generation partnership project (3rd generation partnership project, 3GPP), to ensure service security of a terminal. For example, in a multi-registration scenario of UE, an authentication server function (authentication server function, AUSF) network element provides an AKMA anchor function (AKMA anchor function, AAnF) network element with a K_{AKMA} context and respective registration information of the UE in a plurality of networks, to ensure security of a service that is of the UE and that is related to the plurality of networks.

However, because the AAnF network element cannot support the multi-registration scenario of the UE, the AAnF network element cannot provide support for services corresponding to some networks, causing a service failure.

### SUMMARY

Embodiments of this application provide a network information processing method and apparatus, to ensure a service of a terminal in a multi-registration scenario, and avoid a service failure.

To achieve the foregoing objective, the following technical solutions are used in this application.

According to a first aspect, a network information processing method is provided. The method includes: When a terminal is separately registered with a first network and a second network through a first network element in a home network, a second network element in the home network receives first registration information and second registration information from the first network element, to send security information of the terminal to a third network element based on the first registration information and the second registration information. The first registration information is registration information of the terminal in the first network, and the second registration information is registration information of the terminal in the second network. The third network element is a network element in a network with which the terminal is registered, the network with which the terminal is registered is the first network or the second network, the security information of the terminal is used to perform security protection on data transmission between the terminal and an application server, and the network with which the terminal is registered is used to support the data transmission between the terminal and the application server.

It can be learned from the method according to the first aspect that the second network element may support a multi-registration scenario of the terminal through capability enhancement. For example, the second network element may send the security information of the terminal to the third network element based on the first registration information and the second registration information, to support a service between the terminal and an application server, for example, ensure that service data can be securely transmitted, and avoid a service failure.

In a possible design solution, that a second network element in the home network receives first registration information and second registration information from the first network element includes: The second network element receives a first message from the first network element. The first message includes the first registration information. In this way, the second network element stores the first registration information. Then, the second network element receives a second message from the first network element. The second message includes the second registration information. In this way, the second network element stores the second registration information, and does not delete the first registration information. In other words, when the terminal is registered with the first network and the second network, the second network element may store all registration information such as the first registration information and the second registration information, to ensure that the second network element can send the security information of the terminal to the third network element based on the first registration information and the second registration information.

Optionally, the method according to the first aspect may further include:
The second network element obtains registration indication information. The registration indication information indicates that the terminal is registered with a plurality of networks, and the plurality of networks include the first network and the second network. Correspondingly, that the second network element stores the second registration information, and does not delete the first registration information includes: The second network element stores the second registration information based on the registration indication information, and does not delete the first registration information. In other words, when the second network element obtains the registration indication information, the second network element stores all the registration information; or when the second network element does not obtain the registration indication information, the second network element stores latest information, for example, stores the second registration information, and deletes the first registration information, to save storage space.

Further, the registration indication information is carried in the second message. In other words, the registration indication information is transmitted by reusing the second message, to reduce implementation difficulty.

Optionally, the first network element is an authentication service network element, the first message is a first key registration request message, and the second message is a second key registration request message. In other words, the authentication service network element may provide registration information by reusing a message in a key registration procedure, to reduce implementation difficulty. Alternatively, the first network element is a data management network element, the first message is a first notification message, and the second message is a second notification message. In other words, the data management network element may provide registration information by reusing a message in a notification procedure, to reduce implementation difficulty.

It may be understood that the authentication service network element or the data management network element may alternatively provide registration information by using a newly defined message. This is not limited.

In a possible design solution, that a second network element in the home network receives first registration information and second registration information from the first network element includes: The second network element receives a second message from the first network element. The second message includes the first registration information and the second registration information. In this way, the second network element stores the first registration information and the second registration information.

It may be understood that when storing the first registration information and the second registration information, the second network element may delete previously stored information, for example, the first registration information, to save storage space; or may not delete previously stored information. This is not limited.

Optionally, the first network element is an authentication service network element, and the second message is a second key registration request message. In other words, the authentication service network element may provide registration information by reusing a message in a key registration procedure, to reduce implementation difficulty. Alternatively, the first network element is a data management network element, and the second message is a second notification message. In other words, the data management network element may provide registration information by reusing a message in a notification procedure, to reduce implementation difficulty.

It may be understood that the authentication service network element or the data management network element may alternatively provide registration information by using a newly defined message. This is not limited.

In a possible design solution, that the second network element sends the security information of the terminal to the third network element based on the first registration information and the second registration information includes: The second network element determines, based on the first registration information and the second registration information, that the third network element is a network element in the network with which the terminal is registered. For example, the first registration information includes an identifier of the first network, and the second registration information includes an identifier of the second network. The second network element determines whether an identifier of a network in which the third network element is located matches the identifier of the first network or the identifier of the second network. If the identifier of the network in which the third network element is located matches the identifier of the first network or the identifier of the second network, the second network element determines that the third network element is a network element in the network with which the terminal is registered. The second network element sends the security information to the third network element.

Alternatively, that the second network element sends the security information of the terminal to the third network element based on the first registration information and the second registration information includes: The second network element determines, based on the first registration information and the second registration information, the third network element from the network element in the network with which the terminal is registered, to send the security information of the terminal to the third network element.

It can be learned that the second network element may provide the security information of the terminal only for a trusted network element, for example, a network element in the network with which the terminal is registered. In this way, an untrusted network element, for example, a network element not in the network with which the terminal is registered, may be prevented from obtaining the security information of the terminal, to reduce a risk of data exposure.

In a possible design solution, the method according to the first aspect may further include: The second network element deletes the first registration information based on an indication of the first network element when the terminal is deregistered from the first network; and/or the second network element deletes the second registration information based on an indication of the first network element when the terminal is deregistered from the second network. In this way, maintenance of redundant information can be avoided, storage space can be saved, and device running efficiency can be improved.

In a possible design solution, the first network is a home network of the terminal, and the second network is a visited network of the terminal, to ensure service security in a home-roaming scenario. Alternatively, the first network is a first visited network of the terminal, and the second network is a second visited network of the terminal, to ensure service security in a multi-roaming scenario.

In a possible design solution, the second network element is a security anchor network element, for example, an AAnF network element. This may be applied to an AKMA scenario. Alternatively, the second network element may be any other possible network element. This is not limited.

According to a second aspect, a network information processing method is provided. The method includes: A first network element in a home network determines that a terminal is registered with a plurality of networks, to send first registration information and second registration information to a second network element in the home network. The plurality of networks include a first network and a second network, the first registration information is registration information of the terminal in the first network, the second registration information is registration information of the terminal in the second network, and the first registration information and the second registration information are used by the second network element to provide security protection for the terminal.

In a possible design solution, the first network element is an authentication service network element, and that a first network element in a home network determines that a terminal is registered with a plurality of networks includes: The authentication service network element determines, based on information sent by a data management network element, that the terminal is registered with the plurality of networks. The information sent by the data management network element includes at least one of the following: registration indication information, the first registration information, or the second registration information, and the registration indication information indicates that the terminal is registered with the plurality of networks. It can be learned that the data management network element may choose to explicitly indicate, based on the registration indication information, that the terminal is registered with the plurality of networks, or may choose to implicitly indicate, based on the first registration information and/or the second registration information, that the terminal is registered with the plurality of networks. A specific indication manner to be selected may be determined based on an actual requirement, and is not limited.

In a possible design solution, the method according to the second aspect may further include: The authentication service network element sends an authentication obtaining request message for the terminal to the data management network element, to receive an authentication obtaining response message returned by the data management network element for the authentication obtaining request. The authentication obtaining response message includes at least one of the following: the registration indication information, the first registration information, or the second registration information. It can be learned that the authentication service network element may obtain, by reusing a message in an authentication procedure, for example, a primary authentication procedure, information sent by the data management network element, to reduce implementation difficulty.

In a possible design solution, the first network element is a data management network element, and that a first network element in a home network determines that a terminal is registered with a plurality of networks includes: The data management network element determines, based on a registration status of the terminal, that the terminal is registered with the plurality of networks. In other words, the data management network element may independently sense the registration status of the terminal. In this way, additional signaling interaction can be avoided, and communication overheads can be reduced.

In a possible design solution, that a first network element sends first registration information and second registration information to a second network element includes: The first network element sends a first message to the second network element. The first message includes the first registration information. The first network element sends a second message to the second network element. The second message includes the second registration information.

Optionally, the first network element is an authentication service network element, the first message is a first key registration request message, and the second message is a second key registration request message. Alternatively, the first network element is a data management network element, the first message is a first notification message, and the second message is a second notification message.

In a possible design solution, that a first network element sends first registration information and second registration information to a second network element includes: The first network element sends a second message to the second network element. The second message includes the first registration information and the second registration information.

Optionally, the first network element is an authentication service network element, and the second message is a second key registration request message. Alternatively, the first network element is a data management network element, and the second message is a second notification message.

In a possible design solution, the method according to the second aspect may further include: When the terminal is deregistered from the first network, the first network element indicates the second network element to delete the first registration information; and/or when the terminal is deregistered from the second network, the first network element indicates the second network element to delete the second registration information.

In a possible design solution, the first network is a home network of the terminal, and the second network is a visited network of the terminal; or the first network is a first visited network of the terminal, and the second network is a second visited network of the terminal.

In a possible design solution, the second network element is a security anchor network element.

In addition, for other technical effects of the method according to the second aspect, refer to the technical effects of the method according to the first aspect. Details are not described herein again.

According to a third aspect, a network information processing method is provided. The method includes: A second network element in a home network receives a first request message from a third network element when a terminal is registered with a first network. The first request message is used to request security information of the terminal, the security information of the terminal is used to perform security protection on data transmission between the terminal and an application server, and the first network is used to support data transmission between the terminal and the application server. The second network element determines, based on the first registration information, that the third network element is a network element in the network with which the terminal is registered, to send the security information of the terminal to the third network element. The network with which the terminal is registered includes the first network, and the first registration information is registration information of the terminal in the first network.

In a possible design solution, the method according to the third aspect further includes: The second network element receives a second request message from a fourth network element when the terminal is registered with a second network, the second network element receives a second request message from a fourth network element. The second request message is used to request the security information of the terminal, and the second network is used to support the data transmission between the terminal and the application server. The second network element determines, based on second registration information, that the fourth network element is a network element in the network with which the terminal is registered, to send the security information of the terminal to the fourth network element. The network with which the terminal is registered includes the second network, and the second registration information is registration information of the terminal in the second network.

In a possible design solution, the method according to the third aspect further includes: The second network element receives the first registration information and the second registration information from a first network element in the home network.

Optionally, that the second network element receives the first registration information and the second registration information from a first network element in the home network includes: The second network element receives a first message from the first network element. The first message includes the first registration information. In this way, the second network element stores the first registration information. Then, the second network element receives a second message from the first network element. The second message includes the second registration information. In this way, the second network element stores the second registration information, and does not delete the first registration information.

Further, the method according to the third aspect further includes: The second network element obtains registration indication information. The registration indication information indicates that the terminal is registered with a plurality of networks, and the plurality of networks include the first network and the second network. Correspondingly, that the second network element stores the second registration information, and does not delete the first registration information includes: The second network element stores the second registration information based on the registration indication information, and does not delete the first registration information.

Further, the registration indication information is carried in the second message.

Optionally, the first network element is an authentication service network element, the first message is a first key registration request message, and the second message is a second key registration request message. Alternatively, the first network element is a data management network element, the first message is a first notification message, and the second message is a second notification message.

In a possible design solution, that the second network element receives the first registration information and the second registration information from a first network element in the home network includes: The second network element receives a second message from the first network element. The second message includes the first registration information and the second registration information. In this way, the second network element stores the first registration information and the second registration information.

Optionally, the first network element is an authentication service network element, and the second message is a second key registration request message. Alternatively, the first network element is a data management network element, and the second message is a second notification message.

In a possible design solution, the method according to the first aspect may further include: The second network element deletes the first registration information based on an indication of the first network element when the terminal is deregistered from the first network; and/or the second network element deletes the second registration information based on an indication of the first network element when the terminal is deregistered from the second network.

In a possible design solution, the first network is a home network of the terminal, and the second network is a visited network of the terminal. Alternatively, the first network is a first visited network of the terminal, and the second network is a second visited network of the terminal.

In a possible design solution, the second network element is a security anchor network element.

In addition, for technical effects of the method according to the third aspect, refer to the technical effects of the method according to the first aspect. Details are not described herein again.

According to a fourth aspect, a network information processing method is provided. The method includes: When a terminal is separately registered with a first network and a second network through a first network element in a home network, the first network element sends first registration information and second registration information to a second network element in the home network, and the second network element receives the first registration information and the second registration information from the first network element. The second network element sends security information of the terminal to a third network element based on the first registration information and the second registration information. The first registration information is registration information of the terminal in the first network, and the second registration information is registration information of the terminal in the second network. The third network element is a network element in a network with which the terminal is registered, the network with which the terminal is registered is a network element in the first network or the second network, the security information of the terminal is used to perform security protection on data transmission between the terminal and an application server, and the network with which the terminal is registered is used to support the data transmission between the terminal and the application server.

In a possible design solution, that the first network element sends first registration information and second registration information to a second network element in the home network, and the second network element receives the first registration information and the second registration information from the first network element includes: The first network element sends a first message to the second network element, and the second network element receives the first message from the first network element. The first message includes the first registration information. In this way, the second network element stores the first registration information. The first network element sends a second message to the second network element, and the second network element receives the second message from the first network element. The second message includes the second registration information. In this way, the second network element stores the second registration information, and does not delete the first registration information.

Optionally, the method according to the fourth aspect may further include: The second network element obtains the first registration information. Registration indication information indicates that the terminal is registered with a plurality of networks, and the plurality of networks include the first network and the second network. Correspondingly, that the second network element stores the second registration information, and does not delete the first registration information includes: The second network element stores the second registration information based on the registration indication information, and does not delete the first registration information.

Further, the registration indication information is carried in the second message.

Optionally, the first network element is an authentication service network element, the first message is a first key registration request message, and the second message is a second key registration request message. Alternatively, the first network element is a data management network element, the first message is a first notification message, and the second message is a second notification message.

In a possible design solution, that the first network element sends first registration information and second registration information to a second network element in the home network, and the second network element receives the first registration information and the second registration information from the first network element includes: The first network element sends a second message to the second network element, and the second network element receives the second message from the first network element. The second message includes the first registration information and the second registration information. In this way, the second network element stores the first registration information and the second registration information.

Optionally, the first network element is an authentication service network element, and the second message is a second key registration request message. Alternatively, the first network element is a data management network element, and the second message is a second notification message.

In a possible design solution, before the first network element sends first registration information and second registration information to a second network element in the home network, the method according to the fourth aspect may further include: The first network element determines that the terminal is registered with the plurality of networks. The plurality of networks include the first network and the second network.

Optionally, the first network element is an authentication service network element, and that the first network element determines that the terminal is registered with the plurality of networks includes: The authentication service network element determines, based on information sent by a data management network element, that the terminal is registered with the plurality of networks. The information sent by the data management network element includes at least one of the following: registration indication information, the first registration information, or the second registration information, and the registration indication information indicates that the terminal is registered with the plurality of networks.

Further, the method according to the fourth aspect may further include: The authentication service network element sends an authentication obtaining request message for the terminal to the data management network element, to receive an authentication obtaining response message returned by the data management network element for the authentication obtaining request. The authentication obtaining response message includes at least one of the following: the registration indication information, the first registration information, or the second registration information.

Optionally, the first network element is a data management network element, and that the first network element determines that the terminal is registered with the plurality of networks includes: The data management network element determines, based on a registration status of the terminal, that the terminal is registered with the plurality of networks.

In a possible design solution, that the second network element sends security information of the terminal to a third network element based on the first registration information and the second registration information includes: The second network element determines, based on the first registration information and the second registration information, that the third network element is a network element in the network with which the terminal is registered, to send the security information of the terminal to the third network element.

Alternatively, that the second network element sends the security information of the terminal to the third network element based on the first registration information and the second registration information includes: The second network element determines, based on the first registration information and the second registration information, a third network from the network element in the network with which the terminal is registered, to send the security information of the terminal to the third network element.

In a possible design solution, the method according to the fourth aspect may further include: When the terminal is deregistered from the first network, the first network element indicates the second network element to delete the first registration information, and the second network element deletes the first registration information based on an indication of the first network element; and/or when the terminal is deregistered from the second network, the first network element indicates the second network element to delete the second registration information, and the second network element deletes the second registration information based on an indication of the first network element.

In a possible design solution, the first network is a home network of the terminal, and the second network is a visited network of the terminal. Alternatively, the first network is a first visited network of the terminal, and the second network is a second visited network of the terminal.

In a possible design solution, the second network element is a security anchor network element.

In addition, for technical effects of the method according to the fourth aspect, refer to the technical effects of the methods according to the first aspect and the second aspect. Details are not described herein again.

According to a fifth aspect, a network information processing apparatus is provided. The apparatus includes: a module, configured to perform the method in the first aspect, for example, a transceiver module and a processing module. The transceiver module is configured to perform a transceiver function of the apparatus, and the processing module is configured to perform another function of the apparatus other than the transceiver function.

Optionally, the transceiver module may include a sending module and a receiving module. The sending module is configured to implement a sending function of the apparatus according to the fifth aspect, and the receiving module is configured to implement a receiving function of the apparatus according to the fifth aspect.

Optionally, the apparatus according to the fifth aspect may further include a storage module, and the storage module stores a program or instructions. When the processing module executes the program or the instructions, the apparatus may perform the method according to the first aspect.

It can be understood that the apparatus according to the fifth aspect may be a network device, for example, a second network element, may be a chip (system) or another part or component that may be disposed in the network device, or may be an apparatus including the network device. This is not limited in this application.

In addition, for technical effects of the apparatus according to the fifth aspect, refer to the technical effects of the method according to the first aspect. Details are not described herein again.

According to a sixth aspect, a network information processing apparatus is provided. The apparatus includes: a module, configured to perform the method in the second aspect, for example, a transceiver module and a processing module. The transceiver module is configured to perform a transceiver function of the apparatus, and the processing module is configured to perform another function of the apparatus other than the transceiver function.

Optionally, the transceiver module may include a sending module and a receiving module. The sending module is configured to implement a sending function of the apparatus according to the sixth aspect, and the receiving module is configured to implement a receiving function of the apparatus according to the sixth aspect.

Optionally, the apparatus according to the sixth aspect may further include a storage module, and the storage module stores a program or instructions. When the processing module executes the program or the instructions, the apparatus may perform the method according to the second aspect.

It can be understood that the apparatus according to the sixth aspect may be a network device, for example, a first network element, may be a chip (system) or another part or component that may be disposed in the network device, or may be an apparatus including the network device. This is not limited in this application.

In addition, for technical effects of the apparatus according to the sixth aspect, refer to the technical effects of the method according to the second aspect. Details are not described herein again.

According to a seventh aspect, a network information processing apparatus is provided. The apparatus includes: a module, configured to perform the method in the third aspect, for example, a transceiver module and a processing module. The transceiver module is configured to perform a transceiver function of the apparatus, and the processing module is configured to perform another function of the apparatus other than the transceiver function.

Optionally, the transceiver module may include a sending module and a receiving module. The sending module is configured to implement a sending function of the apparatus according to the seventh aspect, and the receiving module is configured to implement a receiving function of the apparatus according to the seventh aspect.

Optionally, the apparatus according to the seventh aspect may further include a storage module, and the storage module stores a program or instructions. When the processing module executes the program or the instructions, the apparatus may perform the method according to the third aspect.

It can be understood that the apparatus according to the seventh aspect may be a network device, for example, a second network element, may be a chip (system) or another part or component that may be disposed in the network device, or may be an apparatus including the network device. This is not limited in this application.

In addition, for technical effects of the apparatus according to the seventh aspect, refer to the technical effects of the method according to the third aspect. Details are not described herein again.

According to an eighth aspect, a communication apparatus is provided. The communication apparatus includes a processor, and the processor is configured to perform the method according to any one of the first aspect to the fourth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In a possible design solution, the communication apparatus according to the eighth aspect may further include a memory. The memory and the processor may be integrated together, or may be disposed separately. The memory may be configured to store a computer program and/or data related to the method according to any one of the first aspect to the fourth aspect.

The communication apparatus according to the eighth aspect may be the network device according to any one of the first aspect to the fourth aspect, for example, a first network element or a second network element, or a chip (system) or another part or component that may be disposed in the network device, or an apparatus including the network device.

In addition, for technical effects of the communication apparatus according to the eighth aspect, refer to the technical effects of the method according to any one of the first aspect to the fourth aspect. Details are not described herein again.

According to a ninth aspect, a communication apparatus is provided. The communication apparatus includes a processor. The processor is coupled to a memory. The processor is configured to execute a computer program stored in the memory, so that the communication apparatus performs the method according to any one of the first aspect to the fourth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

The communication apparatus according to the ninth aspect may be the network device according to any one of the first aspect to the fourth aspect, for example, a first network element or a second network element, or a chip (system) or another part or component that may be disposed in the network device, or an apparatus including the network device.

In addition, for technical effects of the communication apparatus according to the ninth aspect, refer to the technical effects of the method according to any one of the first aspect to the fourth aspect. Details are not described herein again.

According to a tenth aspect, a communication apparatus is provided, including a processor and a memory. The memory is configured to store a computer program, and when the processor executes the computer program, the communication apparatus is enabled to perform the method according to any one of the first aspect to the fourth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

The communication apparatus according to the tenth aspect may be the network device according to any one of the first aspect to the fourth aspect, for example, a first network element or a second network element, or a chip (system) or another part or component that may be disposed in the network device, or an apparatus including the network device.

In addition, for technical effects of the communication apparatus according to the tenth aspect, refer to the technical effects of the method according to any one of the first aspect to the fourth aspect. Details are not described herein again.

According to an eleventh aspect, a communication apparatus is provided, including a processor. The processor is configured to: be coupled to a memory; and after reading a computer program in the memory, perform, based on the computer program, the method according to any one of the implementations of the first aspect to the fourth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

The communication apparatus according to the eleventh aspect may be the network device according to any one of the first aspect to the fourth aspect, for example, a first home network element or a second home network element, or a chip (system) or another part or component that may be disposed in the network device, or an apparatus including the network device.

In addition, for technical effects of the communication apparatus according to the eleventh aspect, refer to the technical effects of the method according to any one of the first aspect to the fourth aspect. Details are not described herein again.

According to a twelfth aspect, a communication system is provided. The communication system includes the first home network element according to the fourth aspect and the second home network element according to the fourth aspect.

According to a thirteenth aspect, a computer-readable storage medium is provided, including a computer program or instructions. When the computer program or the instructions are run on a computer, the computer is enabled to perform the method according to any one of the first aspect to the fourth aspect.

According to a fourteenth aspect, a computer program product is provided, including a computer program or instructions. When the computer program or the instructions are run on a computer, the computer is enabled to perform the method according to any one of the first aspect to the fourth aspect.

### BRIEF DESCRIPTION OF DRAWINGS

FIG. 1 is a diagram of an architecture of a 5G system;
FIG. 2 is a schematic flowchart of AKMA;
FIG. 3 is a schematic flowchart of session establishment;
FIG. 4A and FIG. 4B are a schematic flowchart of a multi-registration scenario;
FIG. 5 is a schematic of an architecture of a communication system according to an embodiment of this application;
FIG. 6A and FIG. 6B are a schematic flowchart 1 of a network information processing method according to an embodiment of this application;
FIG. 7A and FIG. 7B are a schematic flowchart 2 of a network information processing method according to an embodiment of this application;
FIG. 8A and FIG. 8B are a schematic flowchart 3 of a network information processing method according to an embodiment of this application;
FIG. 9A and FIG. 9B are a schematic flowchart 4 of a network information processing method according to an embodiment of this application;
FIG. 10A and FIG. 10B are a schematic flowchart 5 of a network information processing method according to an embodiment of this application;
FIG. 11A and FIG. 11B are a schematic flowchart 6 of a network information processing method according to an embodiment of this application;
FIG. 12 is a schematic flowchart 7 of a network information processing method according to an embodiment of this application;
FIG. 13 is a schematic flowchart 8 of a network information processing method according to an embodiment of this application;
FIG. 14 is a diagram of a structure of a network information processing apparatus according to an embodiment of this application; and
FIG. 15 is a diagram of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system:

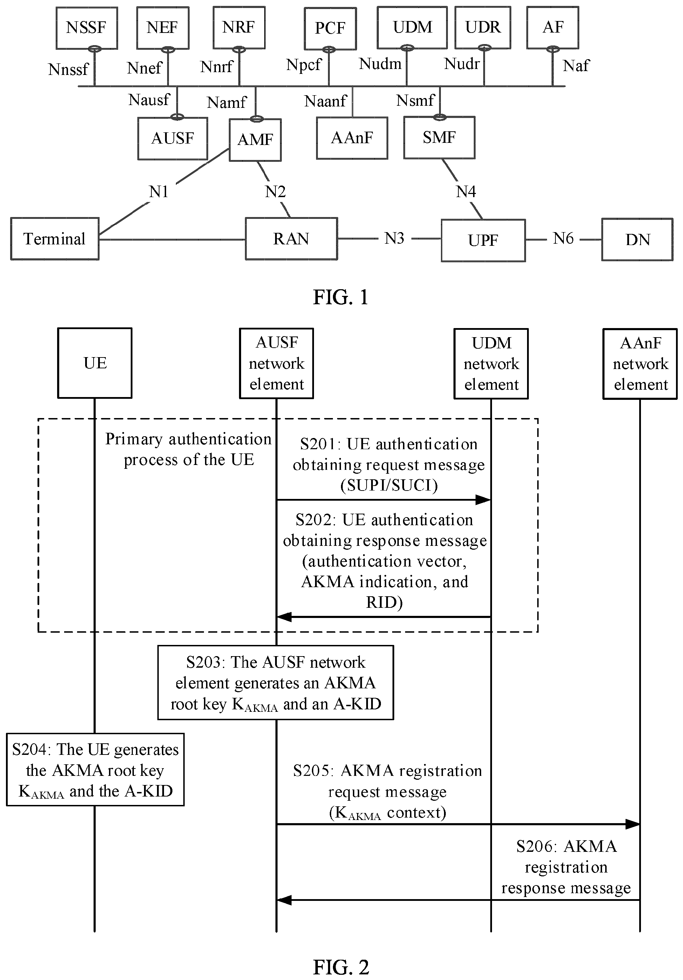

FIG. 1 is a diagram of an architecture of a 5G system. As shown in FIG. 1, the 5G system includes an access network (access network, AN) and a core network (core network, CN), and may further include a terminal.

The terminal may be a terminal having a transceiver function, or a chip or a chip system that may be disposed in the terminal. The terminal may also be referred to as a user equipment s (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in TeleMedicine (remote medical), a wireless terminal in smart grid (smart grid), a wireless terminal in transportation safety (transportation safety), a wireless terminal in smart city (smart city), a wireless terminal in smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted component, a vehicle-mounted chip, or a vehicle-mounted unit that is built in a vehicle as one or more components or units.

The AN is configured to implement an access-related function, may provide a network access function for an authorized user in a specific area, and can determine transmission links with different quality based on a user level, a service requirement, and the like, to transmit user data. The AN forwards a control signal and the user data between the terminal and the CN. The AN may include an access network device, which may also be referred to as a radio access network device (radio access network, RAN) device.

The RAN device may be a device that provides access for the terminal. For example, the RAN device may include a gNB in 5G, for example, a new radio (new radio, NR) system, or one or a group of antenna panels (including a plurality of antenna panels) of a base station in 5G, or may be a network node that forms a gNB, a transmission point (transmission and reception point, TRP, or transmission point, TP), or a transmission measurement function (transmission measurement function, TMF), for example, a baseband unit (baseband unit, BBU), a central unit (central unit, CU) or a distributed unit (distributed unit, DU), an RSU having a base station function, a wired access gateway, or a 5G core network element. Alternatively, the RAN device may further include an access point (access point, AP) in a wireless fidelity (wireless fidelity, Wi-Fi) system, a wireless relay node, a wireless backhaul node, various forms of macro base stations, a micro base station (also referred to as a small cell), a relay station, an access point, a wearable device, a vehicle-mounted device, or the like. Alternatively, the RAN device may include a next-generation mobile communication system, for example, a 6G access network device such as a 6G base station. Alternatively, in the next-generation mobile communication system, the network device may be named in another manner, which falls within the protection scope of embodiments of this application. This is not limited in this application.

The CN is mainly responsible for maintaining subscription data of a mobile network, and provides session management, mobility management, policy management, security authentication, and another function for the terminal. The CN mainly includes the following network elements: a user plane function (user plane function, UPF) network element, an authentication service function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, an application function (application function, AF) network element, a network slice-specific and standalone non-public network (standalone non-public network, SNPN) authentication and authorization function (network slice-specific and SNPN authentication and authorization function, NSSAAF) network element, an AKMA anchor function (AKMA anchor function, AAnF) network element, and the like.

The UPF network element is mainly responsible for user data processing (forwarding, receiving, charging, and the like). For example, the UPF network element may receive user data from a data network (data network, DN), and forward the user data to the terminal via the access network device. The UPF network element may also receive user data from the terminal via the access network device, and forward the user data to the DN. The DN network element is an operator network that provides a data transmission service for a user, for example, an internet protocol (internet protocol, IP) multi-media service (IP multi-media service, IMS) or an internet (internet).

The AMF network element is mainly responsible for mobility management in the mobile network, for example, user location update, registration of the user with a network, and user handover.

The SMF network element is mainly responsible for session management in the mobile network, for example, session establishment, modification, and release. A specific function is, for example, allocating an internet protocol (internet protocol, IP) address to the user, or selecting a UPF that provides a packet forwarding function.

The PCF network element mainly supports to provide a unified policy framework to control a network behavior, and provide a policy rule for a control layer network function, and is responsible for obtaining policy decision-related subscription information of the user. The PCF network element may provide a policy such as a quality of service (quality of service, QoS) policy or a slice selection policy to the AMF network element and the SMF network element.

The NSSF network element may be mainly configured to select a network slice for the terminal.

The UDM network element is configured to store user data, for example, subscription data and authentication/authorization data.

The NSSAAF network element may be configured to: support slice authentication and authorization, and support access to an independent non-public network based on a credential of a credential holder. The NSSAAF network element can interact with an authentication, authorization, and accounting server (authentication, authorization, and accounting server, AAA-S) through an authentication, authorization, and accounting proxy (authentication, authorization, and accounting proxy, AAA-P).

The AUSF network element may be configured to support authentication of 3GPP access and non-3GPP access. For example, in an AKMA scenario, the AUSF network element may generate an AKMA root key K_{AKMA}, and provide the AKMA root key K_{AKMA} for the AAnF.

The AAnF network element may be configured to enable the AKMA root key K_{AKMA} for an AKMA service. To be specific, the AAnF interacts with the AUSF to obtain the AKMA root key K_{AKMA}, and generates, for the AF based on the AKMA root key K_{AKMA}, a key K_{AF} used by the AF and a validity period of the key K_{AF}.

The AF mainly supports interaction with the CN to provide a service, for example, some services affecting a data routing decision-making function, a policy control function, or providing a third-party for a network side. In the AKMA scenario, the AF needs to interact with the AAnF, to obtain the key K_{AF} and the validity period of the key K_{AF}. Based on deployment of an operator, the AF and a network element trusted by an operator may directly exchange a related network function. The AF and a network element untrusted by the operator may complete exchange of the related network function through the NEF network element.

The NEF network element may be used for capability and event exposure, internal-external information translation, non-IP packet transmission, and the like. In the AKMA scenario, the AF may obtain a service of the AAnF network element through the NEF network element.

### 2. AKMA:

FIG. 2 is a schematic flowchart of AKMA. The AKMA may implement a corresponding procedure based on a 5GS architecture shown in FIG. 1. Specifically, as shown in FIG. 2, a procedure includes the following steps.

S201: An AUSF network element sends a UE authentication obtaining request (Nudm_UEAuthentication Get Request) message to a UDM network element. The UDM network element receives the UE authentication obtaining request message from the AUSF network element.

In a primary authentication process of UE, the AUSF network element may send the UE authentication obtaining request message to the UDM network element, to request an authentication vector. The UE authentication obtaining request message may include an identifier of the UE, for example, a subscription permanent identifier (subscription permanent identifier, SUPI) or an SUCI.

S202: The UDM network element sends a UE authentication obtaining response (Nudm_UEAuthentication Get Response) message to the AUSF network element. The AUSF network element receives the UE authentication obtaining response message from the UDM network element.

The UE authentication obtaining response message may include the authentication vector requested based on the UE authentication obtaining request message. Optionally, when the UE supports AKMA, the UE authentication obtaining response message may further include an AKMA indication and a router identifier (router identifier, RID). The AKMA indication may indicate the AUSF network element to generate an AKMA root key K_{AKMA}, and the RID may be used to select an AAnF network element.

S203: The AUSF network element generates the AKMA root key K_{AKMA} and an AKMA-key identifier (AKMA-key identifier, A-KID).

When the AKMA indication and the RID are received, and the primary authentication procedure of the UE is completed, the AUSF network element may generate the AKMA root key K_{AKMA} based on a key K_{AUSF} generated in the primary authentication procedure. The A-KID may identify the AKMA root key K_{AKMA}, for example, including the RID.

S204: The UE generates the AKMA root key K_{AKMA} and the A-KID.

The UE may perform a key derivation procedure similar to that of the AUSF network element, to generate the AKMA root key K_{AKMA} and the A-KID.

S205: The AUSF network element sends an AKMA registration request (Naanf_AKMA_AnchorKeyRegister Request) message to the AAnF network element. The AAnF network element receives the AKMA registration request message from the AUSF network element.

The AKMA registration request message may include a K_{AKMA} context, for example, the SUPI, the A-KID, and the AKMA root key K_{AKMA}. The AUSF network element may select the AAnF network element, for example, select the AAnF network element based on the RID, to send the AKMA registration request message to the AAnF network element.

S206: The AAnF network element sends an AKMA registration response (Naanf_AKMA_AnchorKeyRegistr Request) message to the AUSF network element. The AUSF network element receives the AKMA registration response message from the AAnF network element.

The AKMA registration response message may be used to respond to the AKMA registration request message.

The AAnF network element usually stores only latest information sent by the AUSF network element. For example, when re-authentication occurs, the AUSF network element sends a new A-KID and a new AKMA root key K_{AKMA} to the AAnF network element. In this case, the AAnF network element stores the new A-KID and the new AKMA root key K_{AKMA}, and deletes an old A-KID and an old AKMA root key K_{AKMA}.

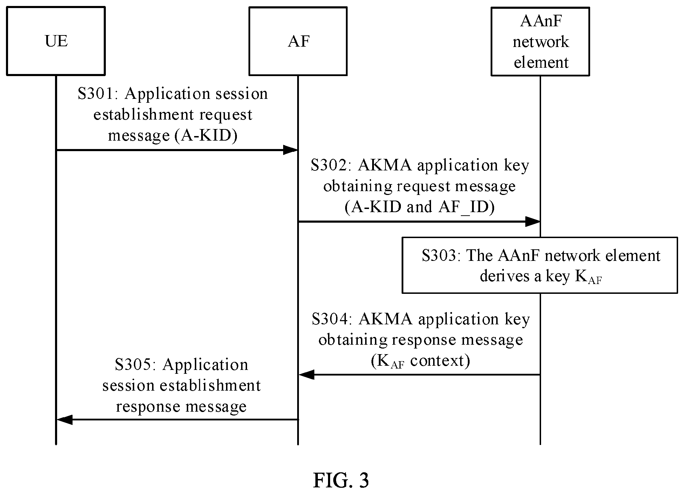

After the procedure shown in FIG. 2 is completed, UE may initiate a session establishment procedure to an AF. Specifically, as shown in FIG. 3, a procedure includes the following steps.

S301: The UE sends an application session establishment request (Application Session Establishment Request) message to the AF. The AF receives the application session establishment request message from the UE.

The application session establishment request message may be used to request the AF to establish an application session. The application session establishment request message may include an A-KID.

An industrial automation service is used as an example. The UE may be a robotic arm for manufacturing, and the AF may be a control server for controlling an operation of the robotic arm. To simplify credential authentication configuration, the robotic arm and the control server may perform negotiation based on an AKMA service, and a secure connection between the robotic arm and the control server is established. The robotic arm sends the application session establishment request message based on an IP address of the control server. Other services such as a vehicle self-driving service, a real-time media service, a 5G messaging service, and an edge computing service are similar to the industrial automation service. The UE may establish a secure connection to a server of the UE. Details are not described herein again.

S302: The AF sends an AKMA application key obtaining request (Naanf_AKMA_ApplicationKey_Get Request) message to an AAnF network element. The AAnF network element receives the AKMA application key obtaining request message from the AF.

The AKMA application key obtaining request message may be used to request a K_{AF} context related to the A-KID, for example, the A-KID, a key K_{AF}, and a validity period of the key K_{AF}. For example, the AKMA application key obtaining request message may include the A-KID and AF_ID. The A-KID may be used as a key identifier to request the key K_{AF}. AF_ID may be used as an input parameter for calculating the key K_{AF}, to implement key isolation between different AFs. The AF may send the AKMA application key obtaining request to the AAnF network element when the AF does not store the context related to the A-KID. For example, the AF may select the AAnF network element, for example, select the AAnF network element based on the A-KID, and send the AKMA application key obtaining request message to the AAnF network element.

The industrial automation service is used as an example. To obtain a key applicable to the control server, in an AKMA application key obtaining request message sent by the control server to the AAnF network element, AF_ID is identification information of the control server. Other services such as the vehicle self-driving service, the real-time media service, the 5G messaging service, and the edge computing service are similar to the industrial automation service. Details are not described herein again.

S303: The AAnF network element derives the key K_{AF}.

The AAnF network element may derive the key K_{AF} by using the AKMA root key K_{AKMA} and AF_ID as input parameters.

The industrial automation service is used as an example. There is a correspondence between the key K_{AF} and the control server. Other services such as the vehicle self-driving service, the real-time media service, the 5G messaging service, and the edge computing service are similar to the industrial automation service. Details are not described herein again.

S304: The AAnF network element sends an AKMA application key obtaining response (Naanf_AKMA_ApplicationKey_Get Request) message to the AF. The AF receives the AKMA application key obtaining response message from the AAnF network element.

The AKMA application key obtaining response message may include the K_{AF} context.

The industrial automation service is used as an example. In the AKMA application key response message sent by the AAnF network element to the control server, the K_{AF} context is a security context of the control server. Other services such as the vehicle self-driving service, the real-time media service, the 5G messaging service, and the edge computing service are similar to the industrial automation service. Details are not described herein again.

S305: The AF sends an application session establishment response (Application Session Establishment Response) message to the UE. The UE receives the application session establishment response message from the AF.

The application session establishment response message may be used to respond to the application session establishment request message. In addition, the UE may independently derive the key K_{AF} and the validity period of the key K_{AF}. Therefore, the AF and the UE obtain a same key, and the AF and the UE can establish an application session based on the same key.

The industrial automation service is used as an example. The robotic arm receives a response message sent by the control server, and the robotic arm and the control server may obtain a same key, and establish a secure connection based on the key. Other services such as a vehicle self-driving service, a real-time media service, a 5G messaging service, and an edge computing service are similar to the industrial automation service. The UE may establish a secure connection to a server of the UE. Details are not described herein again.

### 3. AKMA roaming scenario:

To resolve an AKMA roaming problem, an AAnF network element or a proxy (proxy) network element (the AAnF network element is used as an example below) needs to be deployed on both a home public land mobile network (home public land mobile network, HPLMN) and a visited public land mobile network (visited public land mobile network, VPLMN). The HPLMN is denoted as a home network, and may also be referred to as a home network. The VPLMN is denoted as a roaming network, and may also be referred to as a visited network. An AAnF network element in the roaming network is denoted as a V-AAnF network element, and an AAnF network element in the home network is denoted as an H-AAnF network element. In this case, the AAnF network element shown in FIG. 2 and FIG. 3 may also be understood as an H-AAnF network element, and the AUSF network element may also be understood as an H-AUSF network element.

In this case, the V-AAnF network element may obtain a K_{AKMA} context from the H-AAnF network element, for example, an SUPI, an A-KID, and an AKMA root key K_{AKMA}; or the V-AAnF network element may obtain a K_{AF} context from the H-AAnF network element, for example, an A-KID, a key K_{AF}, and a validity period of the key K_{AF}. For example, after receiving the K_{AKMA} context and an identifier of the roaming network that are sent by the AUSF network element, the H-AAnF network element may select the V-AAnF network element, and actively send the K_{AKMA} context or the K_{AF} context to the V-AAnF network element.

### 4. Multi-registration scenario of UE:

5GS supports the UE to perform multi-network registration based on different access types and networks, for example, to be registered with a first network and a second network. The access type may be 3GPP access or may be non-3GPP access. The first network is different from the second network. For example, the first network and the second network are different visited networks. For example, the first network is a first visited network of the UE, and the second network is a second visited network of the UE; or the first network is a home network of the UE, and the second network is a visited network of the UE. This is not limited.

An industrial automation service is used as an example. In a scenario in which a control server (AF) guides a robotic arm (UE) to perform a high-precision production operation, a highly reliable and secure data connection needs to be established between the robotic arm and the control server. To achieve the foregoing objective, a factory environment may be covered by a plurality of operator networks. As the UE, the robotic arm is registered with two networks, and a data transmission channel is established, to ensure data transmission reliability. For example, the robotic arm may be connected to the first network based on an access type 1, and complete registration with the first network after a primary authentication procedure, to establish a first transmission channel with the control server to carry a transmission service such as a generation operation instruction. Alternatively, the robotic arm may be connected to the second network based on a second access type, and complete registration with the second network after a second time of primary authentication procedure succeeds, to establish a second transmission channel with the control server to carry a transmission service such as a generation operation instruction. In this case, the robotic arm may obtain, through two channels, a message such as an operation instruction sent by the control server, to implement highly reliable data transmission. Other services such as a vehicle self-driving service, a real-time media service, a 5G messaging service, and an edge computing service are similar to the industrial automation service. The UE may establish a secure connection to a server of the UE. Details are not described herein again.

It may be understood that because an H-AAnF network element usually stores only latest information provided by an AUSF network element, some services of the UE may fail, and user experience is affected. The following provides specific descriptions.

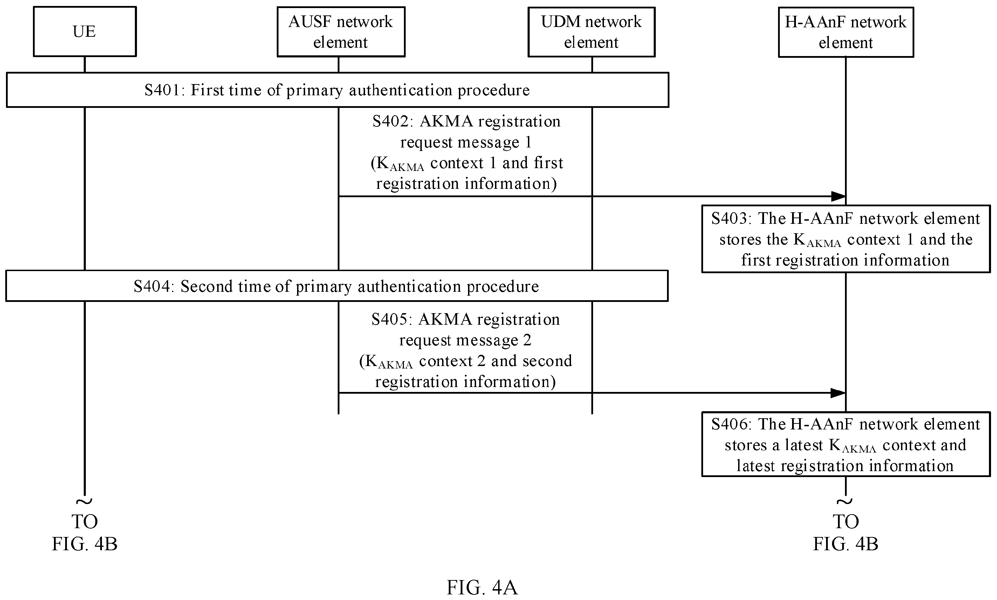

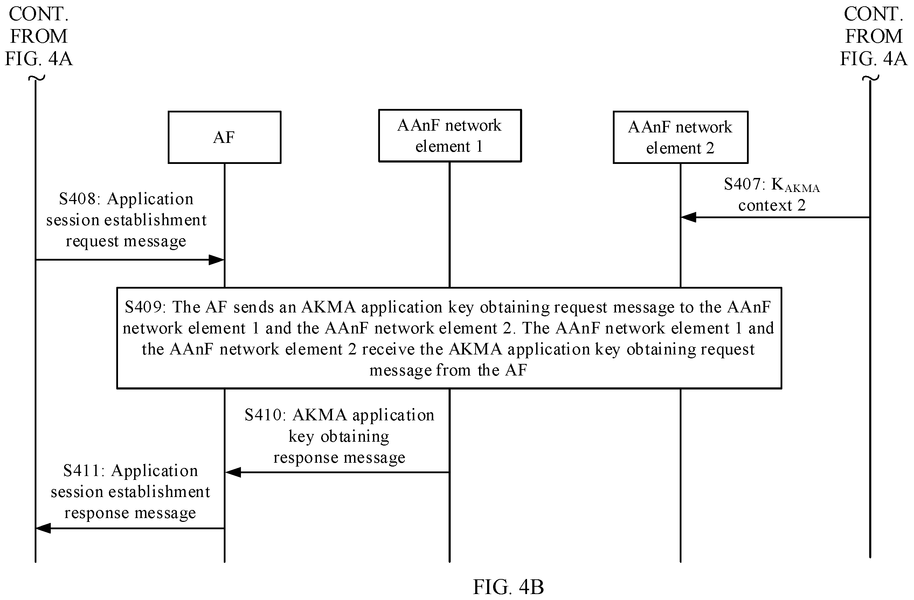

FIG. 4A and FIG. 4B are a schematic flowchart of a service of UE in a multi-registration scenario. As shown in FIG. 4A and FIG. 4B, a procedure specifically includes the following steps.

S401: First time of primary authentication procedure.

The UE may send a registration request to a first network through a first connection (for example, a 3GPP connection or a non-3GPP connection), to trigger a registration procedure. In the registration procedure, an AUSF network element and a UDM network element complete a first time of primary authentication on the UE, to complete registration of the UE with the first network after authentication succeeds. For a specific implementation, refer to the related descriptions of S201 to S204. Details are not described again.

S402: The AUSF network element sends an AKMA registration request message 1 to an H-AAnF network element. The H-AAnF network element receives the AKMA registration request message 1 from the AUSF network element.

The AKMA registration request message 1 may include a K_{AKMA} context 1. For a specific implementation, refer to the related descriptions of S205 and S206. Details are not described again. The AKMA registration request message 1 may further include registration information of the UE with the first network, which is denoted as first registration information. For example, the first registration information may include an identifier of the first network.

S403: The H-AAnF network element stores the K_{AKMA} context 1 and the first registration information.

The AAnF network element stores the first registration information, so that the AAnF network element can subsequently provide the K_{AKMA} context 1 based on the first registration information. For example, the AAnF network element may search, based on the first registration information, for a network element in a network with which the UE is registered, for example, a network element in the first network, to send the K_{AKMA} context 1 to the network element in the first network, so as to ensure security of a related service of the UE, for example, a service that needs to be supported by the first network.

S404: Second time of primary authentication procedure.

The UE may send a registration request to a second network through a second connection (for example, a 3GPP connection or a non-3GPP connection), to trigger a registration procedure. In the registration procedure, the AUSF network element and the UDM network element complete a second time of primary authentication on the UE, to complete registration of the UE with the second network after authentication succeeds. For a specific implementation, also refer to the related descriptions of S201 to S204. Details are not described again.

S405: The AUSF network element sends an AKMA registration request message 2 to the H-AAnF network element. The H-AAnF network element receives the AKMA registration request message 2 from the AUSF network element.

The AKMA registration request message 2 may include a K_{AKMA} context 2. The K_{AKMA} context 2 may be different from the K_{AKMA} context 1. For example, the K_{AKMA} context 2 may be a K_{AKMA} context re-generated by the AUSF network element. For a specific implementation, refer to the related descriptions of S205 and S206. Details are not described again. The AKMA registration request message 2 may further include registration information of the UE with the second network, which is denoted as second registration information. For example, the second registration information may include an identifier of the second network.

S406: The H-AAnF network element stores a latest K_{AKMA} context and latest registration information.

For example, the H-AAnF network element may store the K_{AKMA} context 2 and the second registration information, and delete the K_{AKMA} context 1 and the first registration information.

S407: The H-AAnF network element sends the K_{AKMA} context 2 to the AAnF network element 2.

The AAnF network element 2 is a network element in the second network. The H-AAnF network element may search, based on the second registration information, namely, the identifier of the second network, for a network element in the network with which the UE is registered, namely, a network element in the second network, for example, the AAnF network element 2, to provide the AAnF network element 2 with the K_{AKMA} context 2, so as to ensure security of a related service of the UE, for example, a service that needs to be supported by the second network.

S408: The UE sends an application session establishment request message to the AF. The AF receives the application session establishment request message from the UE.

S409: The AF sends an AKMA application key obtaining request message to an AAnF network element 1 and the AAnF network element 2. The AAnF network element 1 and the AAnF network element 2 receive the AKMA application key obtaining request message from the AF.

The AAnF network element 1 is an AAnF network element in the first network, and the AAnF network element 2 is an AAnF network element in the second network. In this case, for a specific implementation of S408 and S409, refer to the related descriptions of S301 and S302. Details are not described again.

S410: The AAnF network element 2 sends an AKMA application key obtaining response message to the AF. The AF receives the AKMA application key obtaining response message from the AAnF network element 2.

S411: The AF sends an application session establishment response message to the UE. The UE receives the application session establishment response message from the AF.

For a specific implementation of S410 and S411, refer to the related descriptions of S303 to S305. Details are not described again.

It may be understood that, in the multi-registration scenario, the service of the UE may need support of each network. For example, a service 1 of the UE needs support of the first network, and a service 2 of the UE needs support of the second network. Because the H-AAnF network element stores only latest information, for example, the K_{AKMA} context 2 and the second registration information, the H-AAnF network element may find a network element in the second network, for example, the AAnF network element 2, based on the second registration information, to provide the K_{AKMA} context 2 for the AAnF network element 2, so as to ensure security of the service 2. However, because the H-AAnF network element does not store the first registration information, the H-AAnF network element cannot find a network element in the first network, for example, the AAnF network element 1, and therefore cannot provide the K_{AKMA} context 2 for the AAnF network element 1. Consequently, the service 1 may fail. In addition, because the H-AAnF network element lacks a verification capability, the H-AAnF network element may respond to a request of an untrusted AAnF network element, and provide information about the UE for the untrusted AAnF network element. Consequently, the information about the UE is exposed, and a security risk is caused.

In conclusion, for the foregoing technical problems, embodiments of this application provide the following technical solutions, to avoid a service failure of the UE in the multi-registration scenario.

The following describes technical solutions of this application with reference to accompanying drawings.

The technical solutions in embodiments of this application may be applied to various communication systems such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, 5G, for example, a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

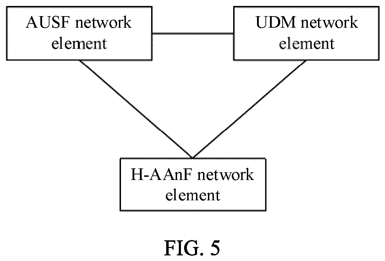

For ease of understanding of embodiments of this application, a communication system applicable to embodiments of this application is first described in detail by using a communication system shown in FIG. 5 as an example. For example, FIG. 5 is a diagram of an architecture of a communication system to which a network information processing method according to an embodiment of this application is applicable.

As shown in FIG. 5, the communication system is applicable to the foregoing 5G system, and mainly includes an AUSF network element, a UDM network element, and an H-AAnF network element.

When UE is registered with a plurality of networks, the AUSF network element or the UDM network element may provide the H-AAnF network element with respective registration information of the UE in the plurality of networks, namely, a plurality of pieces of registration information. The H-AAnF network element may store the plurality of pieces of registration information, to avoid a service failure of the UE.

The H-AAnF network element may further use the plurality of pieces of registration information, to check whether a network element that requests UE information is a trusted network element. For example, the H-AAnF network element may determine whether the network element that requests the UE information is a network element in a network with which the UE is registered. When the network element that requests the UE information is a trusted network element, for example, a network element in a network with which the UE is registered, the H-AAnF network element provides the UE information for the network element that requests the UE information; or if the network element that requests the UE information is not a trusted network element, the H-AAnF network element does not provide the UE information. In this way, an untrusted network element can be prevented from obtaining the UE information, to reduce a security risk of data exposure.

It may be understood that the UE mentioned in this embodiment of this application may also be referred to as a terminal, the H-AAnF network element or the UDM network element may also be referred to as a first network element in a home network (briefly referred to as a first network element), the H-AAnF network element may also be referred to as a second network element in a home network (briefly referred to as a second network element), and so on. Details are not described again.

It may be further understood that the UE may also be registered with more networks such as a network 3 and a network 4. An implementation principle thereof is also covered in this embodiment of this application. For details, refer to related descriptions in this embodiment of this application. Details are not described again.

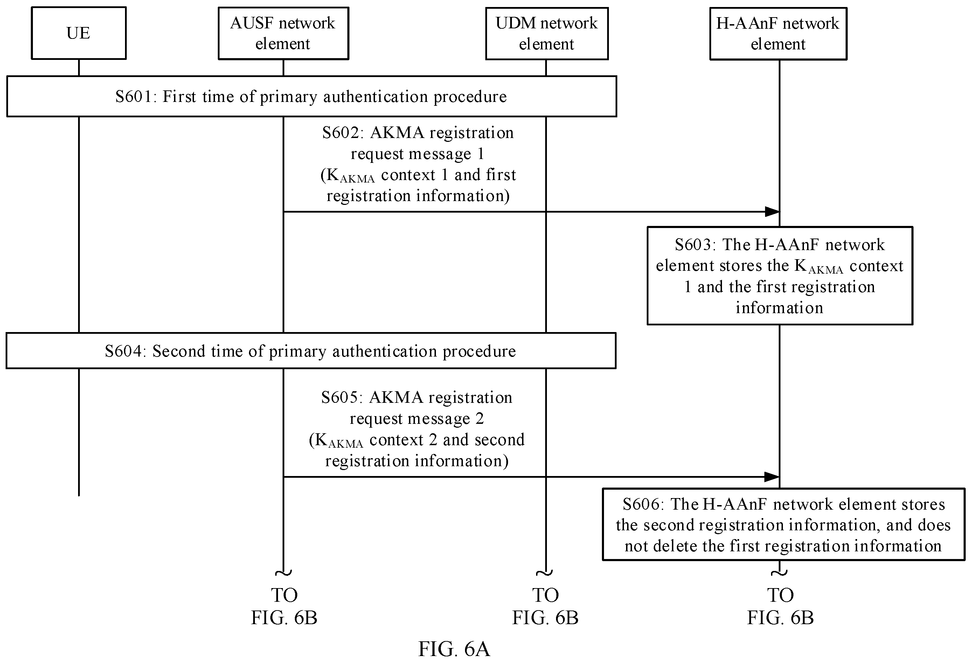

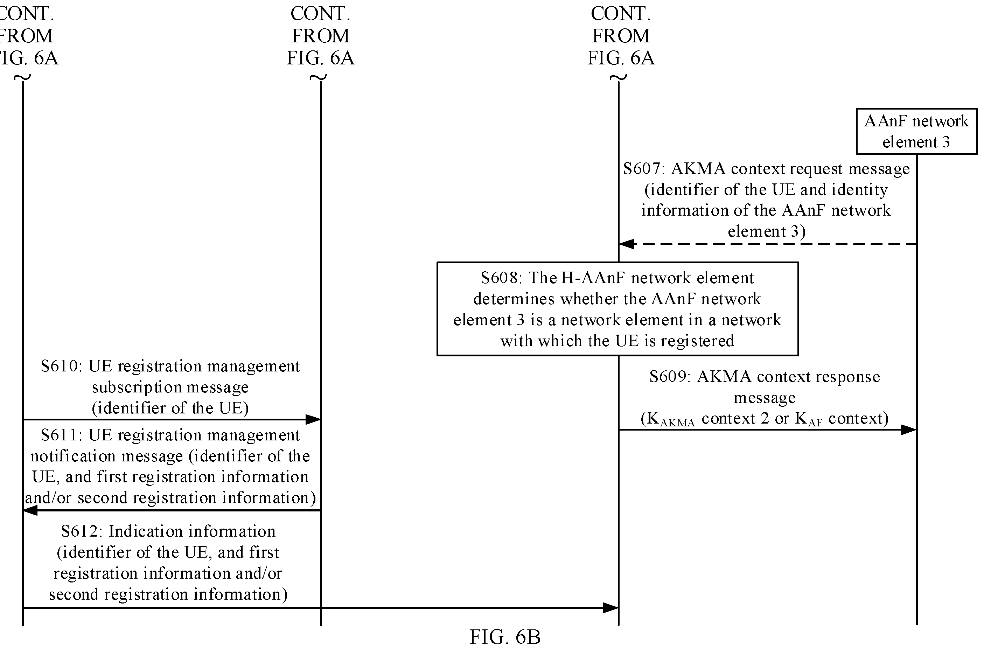

With reference to FIG. 6A and FIG. 6B to FIG. 12, the following specifically describes an interaction procedure between network elements/devices in the foregoing communication system by using method embodiments. A network information processing method provided in embodiments of this application may be applied to the foregoing communication system, and is specifically applied to various scenarios. The following provides specific descriptions.

### Scenario 1:

For example, FIG. 6A and FIG. 6B are a schematic flowchart 1 of a network information processing method according to an embodiment of this application. In Scenario 1, when UE is registered with a first network and a second network, an AUSF network element may provide first registration information and second registration information for an H-AAnF network element. The H-AAnF network element may store the first registration information and the second registration information by default.

Specifically, as shown in FIG. 6A and FIG. 6B, a procedure of the network information processing method is as follows:
S601: First time of primary authentication procedure.

The UE may send a registration request to the first network through a first connection (for example, a 3GPP connection or a non-3GPP connection), to trigger a registration procedure. In the registration procedure, the AUSF network element and a UDM network element complete a first time of primary authentication on the UE, to complete registration of the UE with the first network after authentication succeeds. For a specific implementation, refer to the related descriptions of S201 to S204. Details are not described again.

An industrial automation service is used as an example. A robotic arm (UE) may be connected to the first network based on an access type 1, and complete registration with the first network after a primary authentication procedure, to establish a first transmission channel with the control server (AF) to carry a transmission service such as a generation operation instruction. Other services such as a vehicle self-driving service, a real-time media service, a 5G messaging service, and an edge computing service are similar to the industrial automation service. The UE may establish a secure connection to a server of the UE. Details are not described herein again.

S602: The AUSF network element sends an AKMA registration request message 1 to the H-AAnF network element. The H-AAnF network element receives the AKMA registration request message 1 from the AUSF network element.

For a specific implementation of S602, refer to the related descriptions of S402. Details are not described again.

S603: The H-AAnF network element stores a K_{AKMA} context 1 and the first registration information.

S604: Second time of primary authentication procedure.

The UE may send a registration request to a second network through a second connection (for example, a 3GPP connection or a non-3GPP connection), to trigger a registration procedure. In the registration procedure, the AUSF network element and the UDM network element complete a second time of primary authentication on the UE, to complete registration of the UE with the second network after authentication succeeds. For a specific implementation, refer to the related descriptions of S201 to S204. Details are not described again.

The industrial automation service is used as an example. The robotic arm (UE) may be connected to the second network based on an access type 2, and complete registration with the first network after a primary authentication procedure, to establish a second transmission channel with the control server (AF) to carry a transmission service such as a generation operation instruction. Other services such as the vehicle self-driving service, the real-time media service, the 5G messaging service, and the edge computing service are similar to the industrial automation service. The UE may establish the secure connection to the server of the UE. Details are not described herein again.

S605: The AUSF network element sends an AKMA registration request message 2 to the H-AAnF network element. The H-AAnF network element receives the AKMA registration request message 2 from the AUSF network element.

For a specific implementation of S601 to S605, refer to the related descriptions of S401 to S405. Details are not described again.

S606: The H-AAnF network element stores the second registration information, and does not delete the first registration information.

The H-AAnF network element may obtain a K_{AKMA} context 2 and the second registration information from the AKMA registration request message 2. The H-AAnF network element may store the K_{AKMA} context 2, and delete the previously stored K_{AKMA} context 1. In addition, the H-AAnF network element may further store the second registration information by default, and does not delete the first registration information. In this case, information stored by the H-AAnF network element includes the K_{AKMA} context 2, the first registration information, and the second registration information.

S607: An AAnF network element 3 sends an AKMA context request message to the H-AAnF network element. The H-AAnF network element receives the AKMA context request message from the AAnF network element 3.

The AAnF network element 3 may be a network element in the first network or the second network, or may be a network element in another network. This is not limited. For example, the first network is a home network. The AAnF network element 3 may be an AAnF network element in the home network, and the AAnF network element 3 is an AAnF network element different from the H-AAnF network element. For example, the first network or the second network is a visited network. The AAnF network element 3 may be an AAnF network element in the visited network, and may also be referred to as a V-AAnF network element.

The AKMA context request message may be used to request a K_{AKMA} context. The AKMA context request message may include an identifier of the UE, for example, an SUPI, and identity information of the AAnF network element 3. The identity information of the AAnF network element 3 may be an IP address of the AAnF network element 3, or the identity information of the AAnF network element 3 may be an authentication credential (for example, a certificate) of the AAnF network element 3. The authentication credential of the AAnF network element 3 may include an identifier of a network to which the AAnF network element 3 belongs. The identity information of the AAnF network element 3 may be used by the H-AAnF network element to determine whether the AAnF network element 3 is a network element in a network (for example, the first network or the second network) with which the UE is registered. For a specific implementation, refer to the following related descriptions of S608. Details are not described again.

It may be understood that for a specific implementation of S607, refer to the related descriptions of S301 and S302 and S407 to S409. Details are not described again.

S608: The H-AAnF network element determines whether the AAnF network element 3 is a network element in the network with which the UE is registered.

If the identity information of the AAnF network element 3 is the IP address of the AAnF network element 3, the H-AAnF network element may determine, based on the IP address of the AAnF network element 3, the identifier of the network to which the AAnF network element 3 belongs. For example, a correspondence between an IP address and an identifier of a network is locally configured in the H-AAnF network element. The H-AAnF network element may determine, based on the correspondence, an identifier of a network corresponding to the IP address of the AAnF network element 3, namely, the identifier of the network to which the AAnF network element 3 belongs. Alternatively, if the identity information of the AAnF network element 3 is the authentication credential of the AAnF network element 3, the H-AAnF network element may obtain, from the credential of the AAnF network element 3, the identifier of the network to which the AAnF network element 3 belongs.

It may be understood that the H-AAnF network element may alternatively obtain, in another manner, the identifier of the network to which the AAnF network element 3 belongs. For example, the AAnF network element 3 and the H-AAnF network element may not belong to a same network, and the AAnF network element 3 and the H-AAnF network element usually need to communicate with each other through an NEF network element (not shown in FIG. 6A and FIG. 6B). In this case, the NEF network element may send, to the H-AAnF network element based on the received AKMA context request message, the identifier of the network to which the AAnF network element 3 belongs. Alternatively, the NEF network element may send, to the H-AAnF network element based on a request of the H-AAnF network element, for example, a request that is sent by the H-AAnF network element and that carries the IP address of the AAnF network element 3, the identifier of the network to which the AAnF network element 3 belongs.

Because the H-AAnF network element pre-stores the first registration information and the second registration information, after the H-AAnF network element obtains the identifier of the network to which the AAnF network element 3 belongs, the H-AAnF network element may determine, based on the first registration information and the second registration information, whether the identifier of the network to which the AAnF network element 3 belongs is an identifier of the first network/the second network, that is, determine whether the AAnF network element 3 is a network element in the network with which the UE is registered. For example, the H-AAnF network element may traverse the first registration information and the second registration information based on the identifier of the network to which the AAnF network element 3 belongs, to determine whether the first registration information and the second registration information include an identifier the same as the identifier of the network to which the AAnF network element 3 belongs. If there is a same identifier, the H-AAnF network element determines that the AAnF network element 3 is a network element in the network with which the UE is registered, for example, a network element in the first network, which indicates that the AAnF network element 3 is a trusted network element. If there is no same identifier, the H-AAnF network element determines that the AAnF network element 3 is not a network element in the network with which the UE is registered, which indicates that the AAnF network element 3 is an untrusted network element.

S609: The H-AAnF network element sends an AKMA context response message to the AAnF network element 3. The AAnF network element 3 receives the AKMA context response message from the H-AAnF network element.

When the AAnF network element 3 is a network element in the network with which the UE is registered, the AKMA context response message may include the K_{AKMA} context 2 or a K_{AF} context. The K_{AF} context may be derived from the K_{AKMA} context 2. For a specific implementation, refer to the foregoing related descriptions. Details are not described again. The H-AAnF network element may obtain the K_{AKMA} context 2 or the K_{AF} context based on the identifier of the UE. The H-AAnF network element may encapsulate the K_{AKMA} context 2 or the K_{AF} context into the AKMA context response message, and send the AKMA context response message to the AAnF network element 3.

Alternatively, when the AAnF network element 3 is not a network element in the network with which the UE is registered, the AKMA context response message may include a cause value for a request failure. For example, the cause value may indicate that the AAnF network element 3 is not a network element in the network with which the UE is registered, or the AAnF network element 3 is an untrusted network element. This is not limited.

It can be learned that the H-AAnF network element may provide security information of the terminal, for example, the K_{AKMA} context 2 or the K_{AF} context, only to a trusted network element, for example, a network element in the network with which the terminal is registered, for example, the AAnF network element 3. In this way, an untrusted network element, for example, a network element not in the network with which the terminal is registered, may be prevented from obtaining the security information of the terminal, to reduce a risk of data exposure.

It may be understood that for a specific implementation of S609, refer to the related descriptions of S303 to S305 and S410 to S412. Details are not described again.

It may be further understood that S607 to S609 may also be applied to a single-registration scenario of the UE. For example, when the UE is registered with the first network, the H-AAnF network element may also determine whether the AAnF network element 3 is a network element in the first network, to provide the AAnF network element 3 with the K_{AKMA} context 2 or the K_{AF} context when the AAnF network element 3 is a network element in the first network. In addition, S607 to S609 may be performed for a plurality of times. In other words, in addition to the AAnF network element 3, another AAnF network element, for example, an AAnF network element 4 in the second network requests the H-AAnF network element to provide the K_{AKMA} context. In this case, the H-AAnF network element may perform processing similar to that of the AAnF network element 3 on the AAnF network element 4. For a specific implementation, refer to related descriptions of S607 to S609. Details are not described again.

It may be further understood that S607 is an optional step. For example, the H-AAnF network element may alternatively actively provide the K_{AKMA} context 2 or the K_{AF} context for another AAnF network element, for example, the AAnF network element 3 or the AAnF network element 4. For example, the H-AAnF network element may select the AAnF network element 3 in the first network based on the first registration information, and send the K_{AKMA} context 2 or the K_{AF} context to the AAnF network element 3. In addition, the H-AAnF network element may further select the AAnF network element 4 in the second network based on the second registration information, and send the K_{AKMA} context 2 or the K_{AF} context to the AAnF network element 4. In this case, the AKMA context response message that carries the K_{AKMA} context 2 or the K_{AF} context may be replaced with an AKMA context notification message, an AKMA context sending message, or any other possible message. This is not limited.

It may be further understood that, that the H-AAnF network element provides the K_{AKMA} context 2 or the K_{AF} context is merely an example. For example, another network element (which is not limited to another AAnF network element) may also request the H-AAnF network element to provide the UE information, for example, location information of the UE, device information of the UE, and service information of the UE. In this case, the H-AAnF network element may still determine whether the another network element is a network element in the network with which the UE is registered, so that when the another network element is a network element in the network with which the UE is registered, the H-AAnF network element provides the UE information; or when the another network element is not a network element in the network with which the UE is registered, the H-AAnF network element does not provide the UE information.

S610: The AUSF network element sends a UE registration management subscription (UE_RM_subscription) message to the UDM network element. The UDM network element receives the UE registration management subscription message from the AUSF network element.

The UE registration management subscription message may be used to subscribe to a registration status of the UE, or subscribe to a registration status change event of the UE. The UE registration management subscription message may include the identifier of the UE. In addition, an execution sequence between S610 and S606 to S609 is not limited.

S611: The UDM network element sends a UE registration management notification (UE_ RM_notification) message to the AUSF network element. The AUSF network element receives the UE registration management notification message from the UDM network element.

The UE registration management notification message may indicate the registration state of the UE. For example, the UE registration management notification message may include the identifier of the UE, and the first registration information and/or the second registration information, to indicate that the UE is deregistered from the first network and/or the second network.

Specifically, the UDM network element may track the registration status of the UE based on the UE registration management subscription message, to determine whether the UE is deregistered from the first network and/or the second network. For example, the UDM network element may receive a deregistration event from the H-AMF network element (not shown in FIG. 6A and FIG. 6B). The registration event may indicate that the UE is deregistered from the first network and/or the second network. The UDM network element may determine, based on the registration event, that the UE is deregistered from the first network and/or the second network, to send the UE registration management notification message to the AUSF network element.

S612: The AUSF network element sends indication information to the H-AAnF network element. The H-AAnF network element receives the indication information from the AUSF network element.

The indication information may be carried in any possible signaling. This is not limited. The indication information may indicate that the UE is deregistered from the first network and/or the second network. The indication information may include the identifier of the UE, and the first registration information and/or the second registration information, to indicate that the UE is deregistered from the first network and/or the second network. In this way, the H-AAnF network element may indicate, based on the indication information, that the UE is deregistered from the first network and delete the first registration information; and/or the H-AAnF network element may indicate, based on the indication information, that the UE is deregistered from the second network and delete the second registration information.

It may be understood that the indication information may also implicitly indicate, based on an information type, that the UE is deregistered from the first network and/or the second network. For example, the indication information is type-1 information, and indicates that the UE is deregistered from the first network; the indication information is type-2 information, and indicates that the UE is deregistered from the second network; and the indication information is type-3 information, and indicates that the UE is deregistered from the first network and the second network.

### Scenario 2:

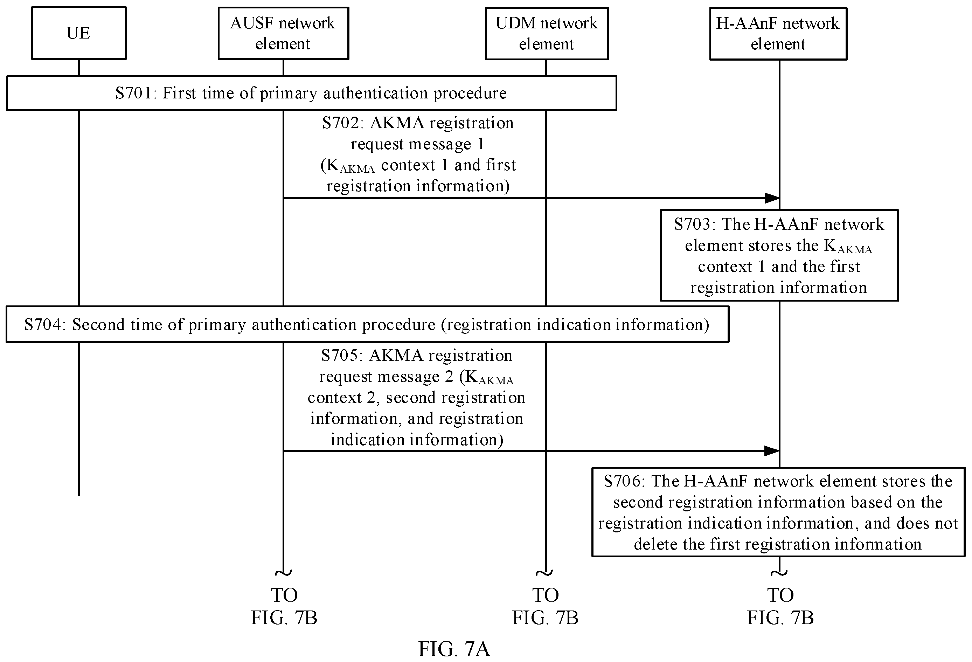

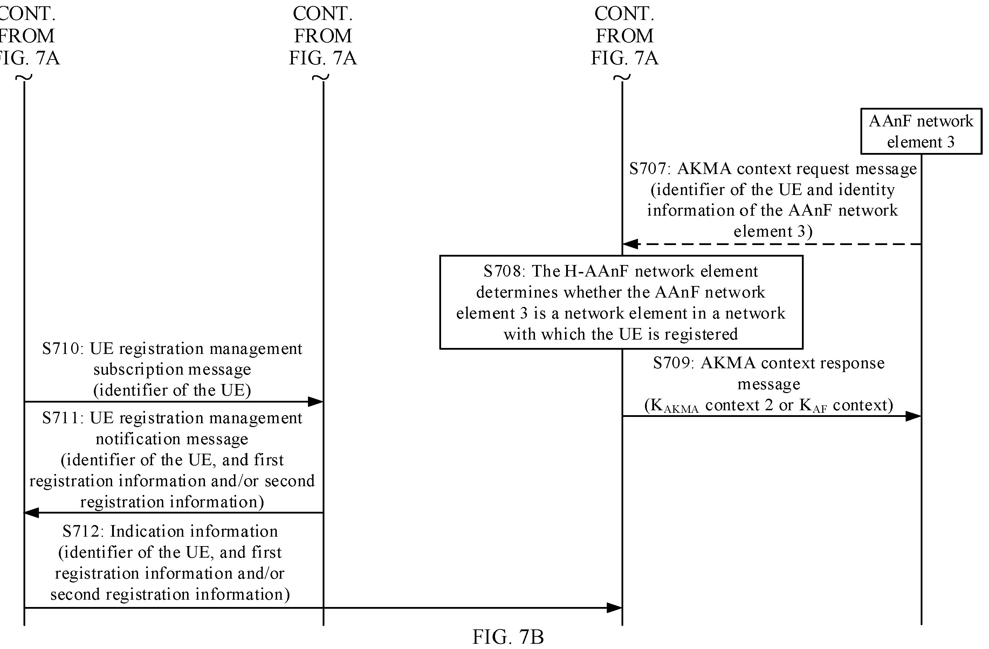

For example, FIG. 7A and FIG. 7B are a schematic flowchart 2 of a network information processing method according to an embodiment of this application. A difference between Scenario 2 and Scenario 1 lies in that a UDM network element may sense that UE is registered with a first network and a second network, to send registration indication information to an AUSF network element, so as to indicate that the UE is registered with a plurality of networks. The AUSF network element may provide an H-AAnF network element with first registration information, second registration information, and registration indication information. The H-AAnF network element may store the first registration information and the second registration information based on the registration indication information.

Specifically, as shown in FIG. 7A and FIG. 7B, a procedure of the network information processing method is as follows:
S701: First time of primary authentication procedure.

The UE may send a registration request to the first network through a first connection (for example, a 3GPP connection or a non-3GPP connection), to trigger a registration procedure. In the registration procedure, the AUSF network element and the UDM network element may complete a first time of primary authentication on the UE. In a process of the first time of primary authentication, the UDM network element may further sense a registration status of the UE, to determine whether the UE is registered with the plurality of networks. For example, the UDM network element may receive an identifier of the UE and an identifier of the first network from the AUSF network element, to indicate that the UE is registered with the first network. The UDM network element may search for a registration network list of the UE based on the identifier of the UE. If the UDM network element does not find the registration network list of the UE, it indicates that the UDM network element has not created the registration network list of the UE. In other words, it indicates that the UE is initially registered with the first network, instead of being registered with the plurality of networks. In this case, the UDM network element may create the registration network list of the UE, and store the identifier of the first network in the registration network list of the UE. Alternatively, if the UDM network element finds the registration network list of the UE, but the registration network list of the UE does not include an identifier of a network, it also indicates that the UE is initially registered with the first network, instead of being registered with the plurality of networks. In this case, the UDM network element may store the identifier of the first network in the registration network list of the UE.

The UDM network element may choose whether to send the registration indication information to the AUSF network element, to indicate, based on whether to send the registration indication information, whether the UE is registered with the plurality of networks. In this case, because the UDM network element senses that the UE is registered with one network, for example, the first network, the UDM network element may choose not to send the registration indication information to the AUSF network element, to indicate that the UE is not registered with the plurality of networks. Certainly, when the UDM network element senses that the UE is registered with the plurality of networks, the UDM network element may choose to send the registration indication information to the AUSF network element, to indicate that the UE is registered with the plurality of networks. For details, refer to the following related descriptions of S704. Details are not described again.

Alternatively, regardless of whether the UE is registered with the plurality of networks, the UDM network element may send the registration indication information to the AUSF network element, and indicate, based on information element content of the registration indication information, whether the UE is registered with the plurality of networks. For example, the registration indication information is an information element of one bit (bit), to indicate, based on two values (0/1) of one bit, whether the UE is registered with the plurality of networks. In this case, because the UDM network element senses that the UE is registered with one network, for example, the first network, the UDM network element sends the registration indication information to the AUSF network element, and an information element value of the registration indication information is 0 (or may be 1), to indicate that the UE is not registered with the plurality of networks. Certainly, when the UDM network element senses that the UE is registered with the plurality of networks, the UDM network element sends the registration indication information to the AUSF network element, and the information element value of the registration indication information is 1 (or may be 0), to indicate that the UE is registered with the plurality of networks. For details, refer to the following related descriptions of S704. Details are not described again.

In addition, for a specific implementation of S701, refer to the related descriptions of S401. Details are not described again.

S702: The AUSF network element sends an AKMA registration request message 1 to the H-AAnF network element. The H-AAnF network element receives the AKMA registration request message 1 from the AUSF network element.

It can be learned from the related descriptions of S701 that the AKMA registration request message 1 may carry the registration indication information, or may not carry the registration indication information. This is not limited. In addition, for a specific implementation of the AKMA registration request message 1, refer to the related descriptions of S402. Details are not described again.

It may be further understood that, in S702, if the AUSF network element receives the registration indication information, the AUSF network element may further sense the registration status of the UE based on the registration indication information, for example, determine that the UE is registered with one network, to send the AKMA registration request message 1 to the H-AAnF network element.

S703: The H-AAnF network element stores a K_{AKMA} context 1 and the first registration information.

The H-AAnF network element may store the K_{AKMA} context 1 and the first registration information by default. Alternatively, optionally, the H-AAnF network element may store the K_{AKMA} context 1 and the first registration information based on that the registration indication information is not obtained; or the H-AAnF network element may indicate, based on the registration indication information, for example, an information element value of the registration indication information, that the UE is not registered with the plurality of networks, and store the K_{AKMA} context 1 and the first registration information. In addition, for a specific implementation of S703, refer to the related descriptions of S403. Details are not described again.

S704: Second time of primary authentication procedure.

The UE may send a registration request to a second network through a second connection (for example, a 3GPP connection or a non-3GPP connection), to trigger a registration procedure. In the registration procedure, the AUSF network element and the UDM network element complete a second time of primary authentication on the UE. In a process of the first time of primary authentication, the UDM network element may further sense a registration status of the UE, to determine whether the UE is registered with the plurality of networks. For example, the UDM network element may receive the identifier of the UE and the identifier of the second network from the AMF network element or the AUSF network element, to indicate that the UE is registered with the second network. The UDM network element may find the registration network list of the UE based on the identifier of the UE. The UDM network element may traverse the registration network list of the UE based on the identifier of the second network, to determine that the registration network list of the UE stores an identifier of a network, for example, the identifier of the first network, and does not store the identifier of the second network, to determine that the UE is registered with the plurality of networks (is registered with the first network and the second network). In this case, the UDM network element may store the identifier of the second network in the registration network list 2 of the UE.

It can be learned from the related descriptions of S701 that the UDM network element may further send the registration indication information to the AUSF network element, to indicate, by sending the registration indication information, that the UE is registered with the plurality of networks, or indicate, based on the information element value of the registration indication information, that the UE is registered with the plurality of networks.

In addition, for a specific implementation of S704, refer to the related descriptions of S404. Details are not described again.

S705: The AUSF network element sends an AKMA registration request message 2 to the H-AAnF network element. The H-AAnF network element receives the AKMA registration request message 2 from the AUSF network element.

The AKMA registration request message 2 may include the second registration information and the registration indication information, to indicate, by sending the registration indication information, that the UE is registered with the plurality of networks, or indicate, based on the information element value of the registration indication information, that the UE is registered with the plurality of networks. For example, after the AUSF network element receives the registration indication information from the UDM network element, the AUSF network element may store the registration indication information. The AUSF network element may use the AKMA registration request message 2 to carry the second registration information and the registration indication information, and then send the AKMA registration request message 2 to the H-AAnF network element.

It may be understood that the AKMA registration request message 2 may further include another information element. For a specific implementation, refer to the related descriptions of S405. Details are not described again.

It may be further understood that, in S705, the AUSF network element may further sense the registration status of the UE based on the registration indication information, for example, determine that the UE is registered with the plurality of networks, to send the AKMA registration request message 2 to the H-AAnF network element.

S706: The H-AAnF network element stores the second registration information based on the registration indication information, and does not delete the first registration information.

The H-AAnF network element may obtain the K_{AKMA} context 2, the second registration information, and the registration indication information from the AKMA registration request message 2. The H-AAnF network element may store the K_{AKMA} context 2, and delete the previously stored K_{AKMA} context 1. In addition, the H-AAnF network element may further store the second registration information based on the registration indication information, and does not delete the first registration information. In this case, information stored by the H-AAnF network element includes the K_{AKMA} context 2, the first registration information, and the second registration information. In addition, when the H-AAnF network element does not obtain the registration indication information, or obtains the registration indication information, but the registration indication information indicates that the UE is not registered with the plurality of networks, the H-AAnF network element may store the second registration information, and delete the first registration information.

It may be understood that whether to send the registration indication information or whether the registration indication information indicates that the UE is registered with the plurality of networks may be determined based on an actual service requirement. For example, if an actual service is applicable to a single-registration scenario of the UE, registration information may not be sent, or registration information indicates that the UE is not registered with the plurality of networks; or if an actual service is applicable to a multi-registration scenario of the UE, registration information may be sent, or registration information indicates that the UE is registered with the plurality of networks. In this way, the H-AAnF network element may choose, based on an actual service requirement, whether to delete previously stored registration information, to ensure that the actual service requirement can be met.

S707: An AAnF network element 3 sends an AKMA context request message to the H-AAnF network element. The H-AAnF network element receives the AKMA context request message from the AAnF network element 3.

S708: The H-AAnF network element determines whether the AAnF network element 3 is a network element in a network with which the UE is registered.

S709: The H-AAnF network element sends an AKMA context response message to the AAnF network element 3. The AAnF network element 3 receives the AKMA context response message from the H-AAnF network element.

S710: The AUSF network element sends a UE registration management subscription message to the UDM network element. The UDM network element receives the UE registration management subscription message from the AUSF network element.

For a specific implementation of S706 to S710, refer to the related descriptions of S606 to S610. Details are not described again.

S711: The UDM network element sends a UE registration management notification message to the AUSF network element. The AUSF network element receives the UE registration management notification message from the UDM network element.

It may be understood that a specific implementation of S711 is similar to that of S611. For understanding, refer to S611. Details are not described again. However, a difference between S711 and S611 lies in that if the UDM network element senses that the UE is deregistered from a network, the UDM network element may delete registration information of the UE in the network from the registration network list of the UE. For example, when the UE is deregistered from the first network, the UDM network element deletes the identifier of the first network from the registration network list of the UE; and/or when the UE is deregistered from the second network, the UDM network element deletes the identifier of the second network from the registration network list of the UE.

S712: The AUSF network element sends indication information to the H-AAnF network element. The H-AAnF network element receives the indication information from the AUSF network element.

For a specific implementation of S712, refer to the related descriptions of S612. Details are not described again.

### Scenario 3:

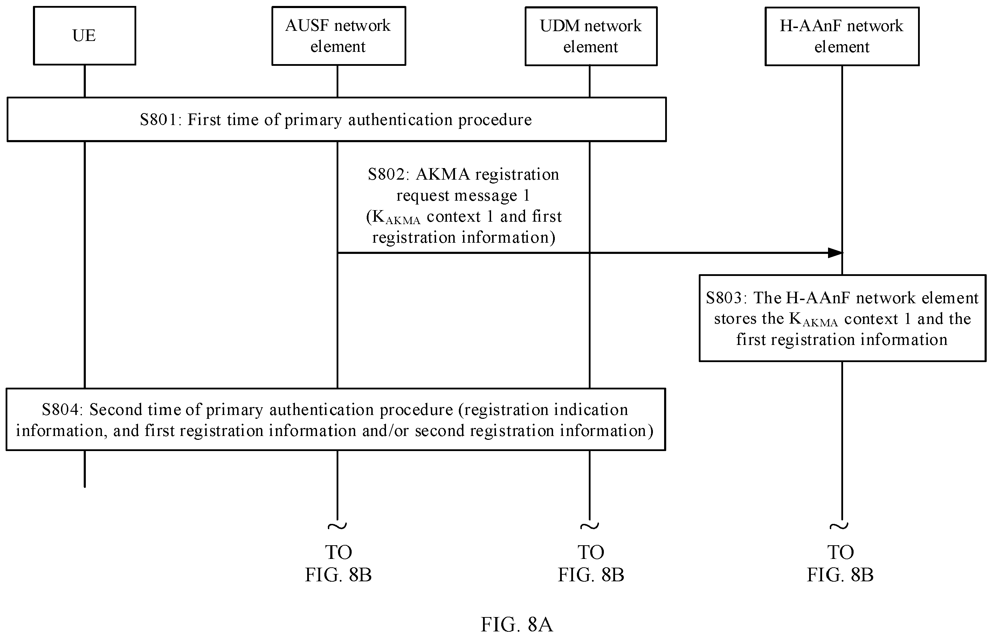

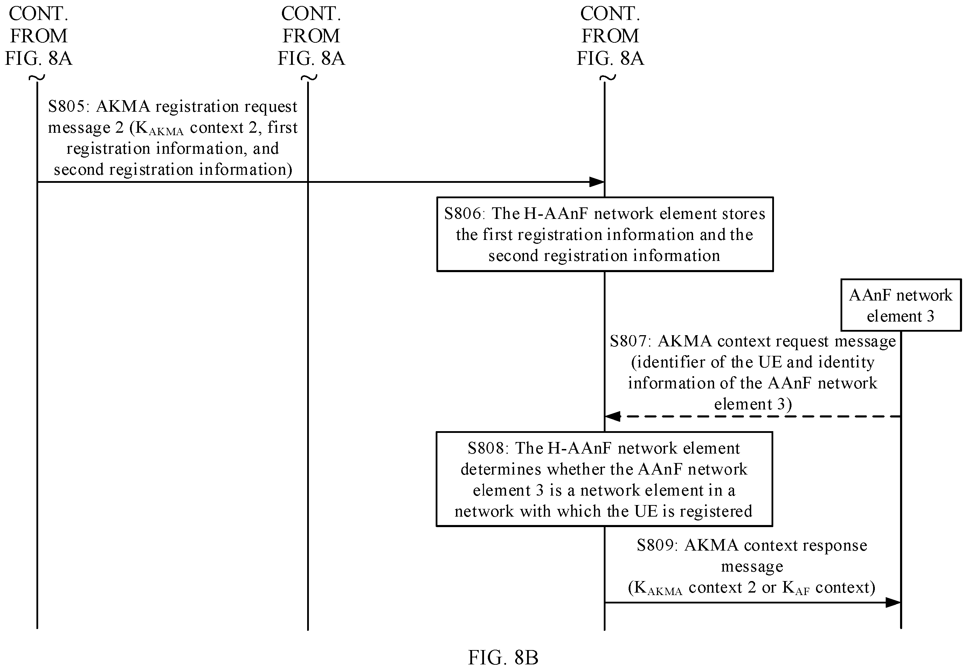

For example, FIG. 8A and FIG. 8B are a schematic flowchart 3 of a network information processing method according to an embodiment of this application. Different from Scenario 1 and Scenario 2, in Scenario 3, when an AUSF network element senses that UE is registered with a first network and a second network, the AUSF network element may provide first registration information and second registration information for an H-AAnF network element through one piece of signaling, so that the H-AAnF network element can store the first registration information and the second registration information.

Specifically, as shown in FIG. 8A and FIG. 8B, a procedure of the network information processing method is as follows:
S801: First time of primary authentication procedure.
S802: The AUSF network element sends an AKMA registration request message 1 to the H-AAnF network element. The H-AAnF network element receives the AKMA registration request message 1 from the AUSF network element.
S803: The H-AAnF network element stores a K_{AKMA} context 1 and the first registration information.

For a specific implementation of S801, refer to the related descriptions of S701. For a specific implementation of S802 and S803, refer to the related descriptions of S702 and S703. Details are not described again.

S804: Second time of primary authentication procedure.

The UE may send a registration request to a second network through a second connection (for example, a 3GPP connection or a non-3GPP connection), to trigger a registration procedure. In the registration procedure, the AUSF network element and the UDM network element may complete a second time of primary authentication on the UE. In a process of the first time of primary authentication, the UDM network element may further sense a registration status of the UE, to determine whether the UE is registered with the plurality of networks. A specific implementation is similar to that of S704. For understanding, refer to S704. Details are not described again. When the UE is registered with a plurality of networks, the UDM network element may send at least one piece of information to the AUSF network element: registration indication information, the first registration information, or the second registration information. For a specific implementation of the registration indication information, refer to the related descriptions of S701 to S704. Details are not described again.

It can be learned that the UDM network element may explicitly indicate, based on the registration indication information, that the UE is registered with the plurality of networks, or may implicitly indicate, based on the first registration information and/or the second registration information, that the UE is registered with the plurality of networks. Specifically, whether an explicit indication manner or an implicit indication manner is used is not limited.

S805: The AUSF network element sends an AKMA registration request message 2 to the H-AAnF network element. The H-AAnF network element receives the AKMA registration request message 2 from the AUSF network element.

The AKMA registration request message 2 may include a K_{AKMA} context 2, the first registration information, and the second registration information. The AUSF network element may determine, based on an indication of the UDM network element, for example, the at least one piece of information, that the UE is registered with the plurality of networks. The AUSF network element may obtain registration information of the UE in the plurality of networks, for example, the first registration information and the second registration information, encapsulate the K_{AKMA} context 2, the first registration information, and the second registration information together into the AKMA registration request message 2, and send the AKMA registration request message 2 to the H-AAnF network element.

S806: The H-AAnF network element stores the first registration information and the second registration information.

The H-AAnF network element may obtain the K_{AKMA} context 2, the first registration information, and the second registration information from the AKMA registration request message 2, and store the K_{AKMA} context 2, the first registration information, and the second registration information. In addition, the H-AAnF network element may further delete previously stored information, for example, the K_{AKMA} context 1 and the first registration information that are stored in S803.

S807: An AAnF network element 3 sends an AKMA context request message to the H-AAnF network element. The H-AAnF network element receives the AKMA context request message from the AAnF network element 3.

S808: The H-AAnF network element determines whether the AAnF network element 3 is a network element in a network with which the UE is registered.

S809: The H-AAnF network element sends an AKMA context response message to the AAnF network element 3. The AAnF network element 3 receives the AKMA context response message from the H-AAnF network element.

For a specific implementation of S806 and S809, refer to the related descriptions of S606 and S609. Details are not described again.

It may be understood that, similar to Scenario 2, if the UDM network element senses that the UE is deregistered from a network, the UDM network element may delete registration information of the UE in the network from a registration network list of the UE. For a specific implementation, refer to the related descriptions of Scenario 2. Details are not described again.

### Scenario 4:

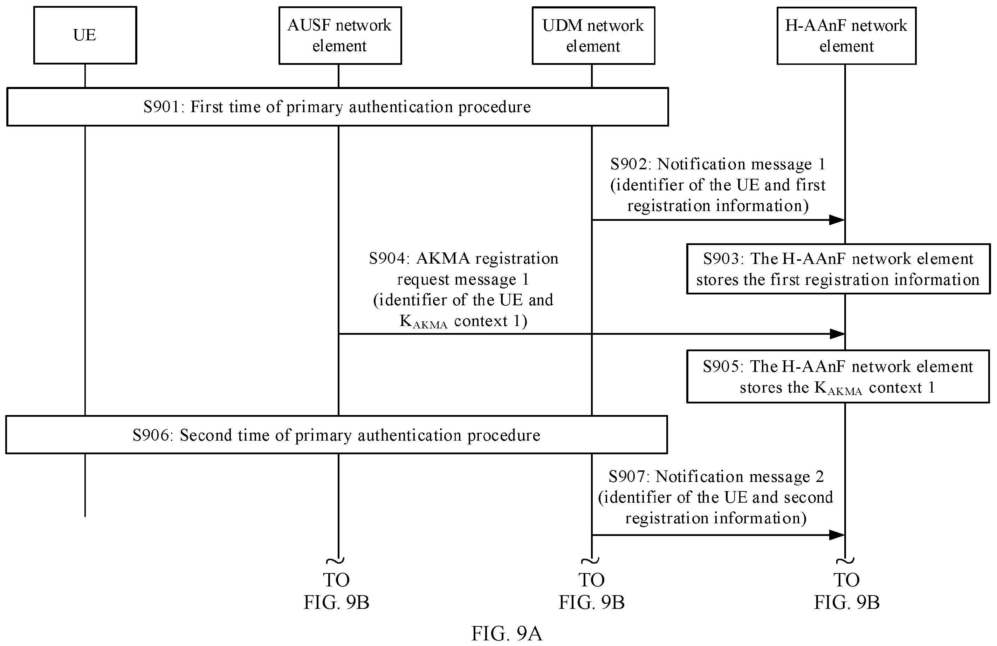

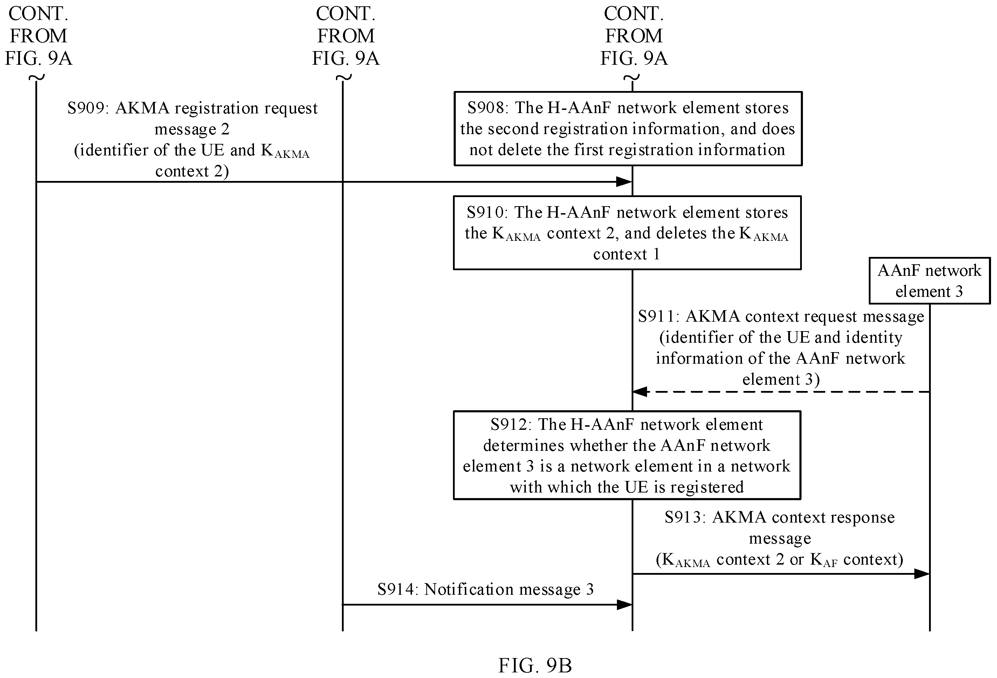

For example, FIG. 9A and FIG. 9B are a schematic flowchart 4 of a network information processing method according to an embodiment of this application. Different from Scenario 1 to Scenario 3, in Scenario 4, when UE is registered with a first network and a second network, a UDM network element may provide first registration information and second registration information for an H-AAnF network element, so that the H-AAnF network element can store the first registration information and the second registration information.

Specifically, as shown in FIG. 9A and FIG. 9B, a procedure of the network information processing method is as follows:
S901: First time of primary authentication procedure.

In a process in which the UDM network element cooperates to complete a first time of primary authentication on UE, the UDM network element may further sense a registration status of the UE, to determine the first network with which the UE is registered, and obtain the first registration information. A specific implementation principle is similar to that of S701. For understanding, refer to S701. Details are not described again.

S902: The UDM network element sends a notification message 1 to the H-AAnF network element. The H-AAnF network element receives the notification message 1 from the UDM network element.

The notification message 1 may include an identifier of the UE and the first registration information.

S903: The H-AAnF network element stores the first registration information.

The H-AAnF network element may obtain the identifier of the UE and the first registration information from the notification message 1, and store the first registration information based on the identifier of the UE, for example, store the first registration information in related information of the UE.

S904: The AUSF network element sends an AKMA registration request message 1 to the H-AAnF network element. The H-AAnF network element receives the AKMA registration request message 1 from the AUSF network element.

The AKMA registration request message 1 may include the identifier of the UE and a K_{AKMA} context 1, and may not include the first registration information. For a specific implementation of S904, refer to the related descriptions of S402. Details are not described again.

S905: The H-AAnF network element stores the K_{AKMA} context 1.

The H-AAnF network element may obtain the identifier of the UE and the K_{AKMA} context 1 from the AKMA registration request message 1, and store the K_{AKMA} context 1 based on the identifier of the UE, for example, store the K_{AKMA} context 1 in the related information of the UE.

It may be understood that an execution sequence between S902 and S903 and S904 and S905 is not limited.

S906: Second time of primary authentication procedure.

In a process in which the UDM network element cooperates to complete a second time of primary authentication on UE, the UDM network element may further sense a registration status of the UE, to determine the second network with which the UE is registered, and obtain the second registration information. A specific implementation principle is similar to that of S704. For understanding, refer to S704. Details are not described again.

S907: The UDM network element sends a notification message 2 to the H-AAnF network element. The H-AAnF network element receives the notification message 2 from the UDM network element.

The notification message 2 may include the identifier of the UE and the second registration information.

S908: The H-AAnF network element stores the second registration information, and does not delete the first registration information.

The H-AAnF network element may obtain the identifier of the UE and the second registration information from the notification message 2. The H-AAnF network element may store the second registration information based on the identifier of the UE, and does not delete the first registration information. For example, the H-AAnF network element stores the second registration information in the related information of the UE, and does not delete the first registration information in the related information of the UE.

S909: The AUSF network element sends an AKMA registration request message 2 to the H-AAnF network element. The H-AAnF network element receives the AKMA registration request message 2 from the AUSF network element.

The AKMA registration request message 2 may include the identifier of the UE and a K_{AKMA} context 2, and may not include the second registration information. For a specific implementation of S907, refer to the related descriptions of S405. Details are not described again.

S910: The H-AAnF network element stores the K_{AKMA} context 2, and deletes the K_{AKMA} context 1.

The H-AAnF network element may obtain the identifier of the UE and the K_{AKMA} context 2 from the AKMA registration request message 2, store the K_{AKMA} context 2 based on the identifier of the UE, and delete the K_{AKMA} context 1. For example, the H-AAnF network element stores the K_{AKMA} context 1 in the related information of the UE, and deletes the K_{AKMA} context 1 in the related information of the UE.

It may be understood that an execution sequence between S907 and S908 and S909 and S910 is not limited.

S911: An AAnF network element 3 sends an AKMA context request message to the H-AAnF network element. The H-AAnF network element receives the AKMA context request message from the AAnF network element 3.

S912: The H-AAnF network element determines whether the AAnF network element 3 is a network element in a network with which the UE is registered.

S913: The H-AAnF network element sends an AKMA context response message to the AAnF network element 3. The AAnF network element 3 receives the AKMA context response message from the H-AAnF network element.

For a specific implementation of S911 to S913, refer to the related descriptions of S607 and S608. Details are not described again.

S914: The UDM network element sends a notification message 3 to the H-AAnF network element. The H-AAnF network element receives the notification message 3 from the UDM network element.

The UDM network element may sense that the UE is deregistered from the first network and/or the second network, to send the notification message 3 to the H-AAnF network element, so as to indicate that the UE is deregistered from the first network and/or the second network. In this way, the H-AAnF network element may indicate, based on the notification message 3, that the UE is deregistered from the first network and delete the first registration information; and/or the H-AAnF network element may indicate, based on the notification message 3, that the UE is deregistered from the second network and delete the second registration information.

A specific implementation principle in which the UDM network element senses that the UE is deregistered from the first network and/or the second network is similar to that of S612. For understanding, refer to S612. Details are not described again.

### Scenario 5:

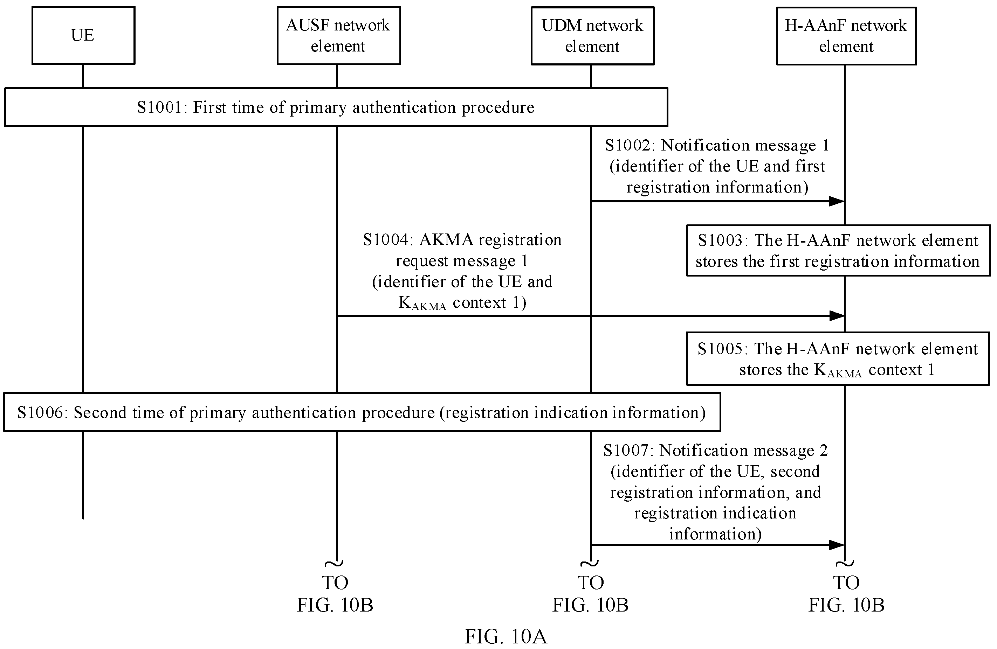

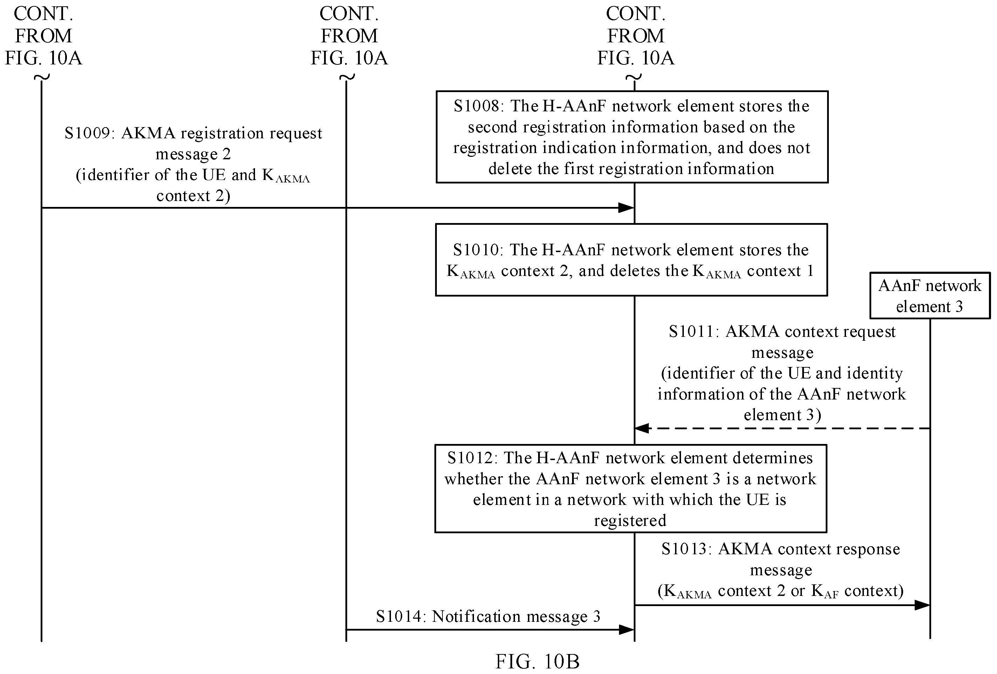

For example, FIG. 10A and FIG. 10B are a schematic flowchart 5 of a network information processing method according to an embodiment of this application. Different from Scenario 4, in Scenario 5, when UE is registered with a first network and a second network, a UDM network element may provide an H-AAnF network element with first registration information, second registration information, and registration indication information, to indicate that the UE is registered with a plurality of networks. The H-AAnF network element may store the first registration information and the second registration information based on the registration indication information.

Specifically, as shown in FIG. 10A and FIG. 10B, a procedure of the network information processing method is as follows:
S1001: First time of primary authentication procedure.

A specific implementation of S1001 is similar to that of S901. For understanding, refer to S901. Details are not described again. Optionally, different from S901, in S1001, the UDM network element may alternatively send the registration indication information to an AUSF network element, to indicate, based on an information element value of the registration indication information, that the UE is not registered with a plurality of networks. Alternatively, the UDM network element may indicate, by not sending the registration indication information to an AUSF network element, that the UE is not registered with a plurality of networks. For a specific implementation, refer to the related descriptions of S701. Details are not described again.

S1002: The UDM network element sends a notification message 1 to the H-AAnF network element. The H-AAnF network element receives the notification message 1 from the UDM network element.

A specific implementation of S1002 is similar to that of S902. For understanding, refer to S902. Details are not described again. Optionally, different from S902, in S1002, the notification message 1 may alternatively carry the registration indication information, to indicate that the UE is not registered with the plurality of networks. This is not limited.

S1003: The H-AAnF network element stores the first registration information.

The H-AAnF network element may obtain the identifier of the UE and the first registration information from the notification message 1, and store the first registration information by default based on the identifier of the UE, for example, store the first registration information in related information of the UE. Alternatively, optionally, the H-AAnF network element may store the first registration information based on the identifier of the UE and that the H-AAnF network element has not obtained the registration indication information from the notification message 1, or the H-AAnF network element may store the first registration information based on the identifier of the UE and that the registration indication information obtained from the notification message 1, for example, an information element value of the registration indication information indicates that the UE is not registered with the plurality of networks.

S1004: The AUSF network element sends an AKMA registration request message 1 to the H-AAnF network element. The H-AAnF network element receives the AKMA registration request message 1 from the AUSF network element.

S1005: The H-AAnF network element stores a K_{AKMA} context 1.

For a specific implementation of S1004 and S1005, refer to the related descriptions of S904 and S905. Details are not described again.

S1006: Second time of primary authentication procedure.

In a process in which the UDM network element cooperates with the AUSF network element to complete a second time of primary authentication on the UE, the UDM network element may further sense a registration status of the UE, to determine that the UE is registered with the plurality of networks. A specific implementation principle is similar to that of S704. For understanding, refer to S704. Details are not described again. In this case, the UDM network element may obtain the second registration information, and generate and store the registration indication information. For a specific implementation of the registration indication information, also refer to related description of S704. Details are not described again.

S1007: The UDM network element sends a notification message 2 to the H-AAnF network element. The H-AAnF network element receives the notification message 2 from the UDM network element.

The notification message 2 may include the identifier of the UE, the second registration information, and the registration indication information, to indicate, by sending the registration indication information, that the UE is registered with the plurality of networks, or indicate, based on the information element value of the registration indication information, that the UE is registered with the plurality of networks.

S1008: The H-AAnF network element stores the second registration information based on the registration indication information, and does not delete the first registration information.

The H-AAnF network element may obtain the identifier of the UE, the second registration information, and the registration indication information from the notification message 2. The H-AAnF network element may store the second registration information based on the identifier of the UE and the registration indication information, and does not delete the first registration information. For example, the H-AAnF network element stores the second registration information in the related information of the UE, and does not delete the first registration information in the related information of the UE.

It may be understood that when the registration indication information is not obtained or the registration indication information is obtained, but the registration indication information indicates that the UE is not registered with the plurality of networks, the H-AAnF network element may store the second registration information, and delete the first registration information.

S1009: The AUSF network element sends an AKMA registration request message 2 to the H-AAnF network element. The H-AAnF network element receives the AKMA registration request message 2 from the AUSF network element.

S1010: The H-AAnF network element stores a K_{AKMA} context 2, and deletes the K_{AKMA} context 1.

For a specific implementation of S1009 and S1010, refer to the related descriptions of S909 and S910. Details are not described again.

S1011: An AAnF network element 3 sends an AKMA context request message to the H-AAnF network element. The H-AAnF network element receives the AKMA context request message from the AAnF network element 3.

S1012: The H-AAnF network element determines whether the AAnF network element 3 is a network element in a network with which the UE is registered.

S1013: The H-AAnF network element sends an AKMA context response message to the AAnF network element 3. The AAnF network element 3 receives the AKMA context response message from the H-AAnF network element.

S1014: The UDM network element sends a notification message 3 to the H-AAnF network element. The H-AAnF network element receives the notification message 3 from the UDM network element.

For a specific implementation of S1011 to S1013, refer to the related descriptions of S607 and S608. For a specific implementation of S1014, refer to the related descriptions of S914. Details are not described again.

### Scenario 6:

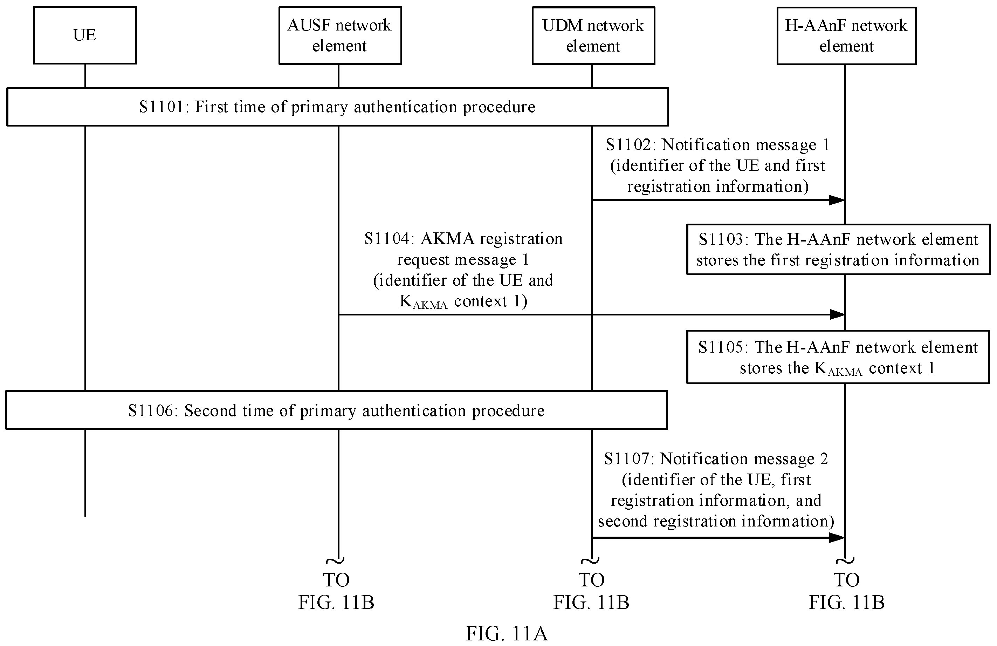

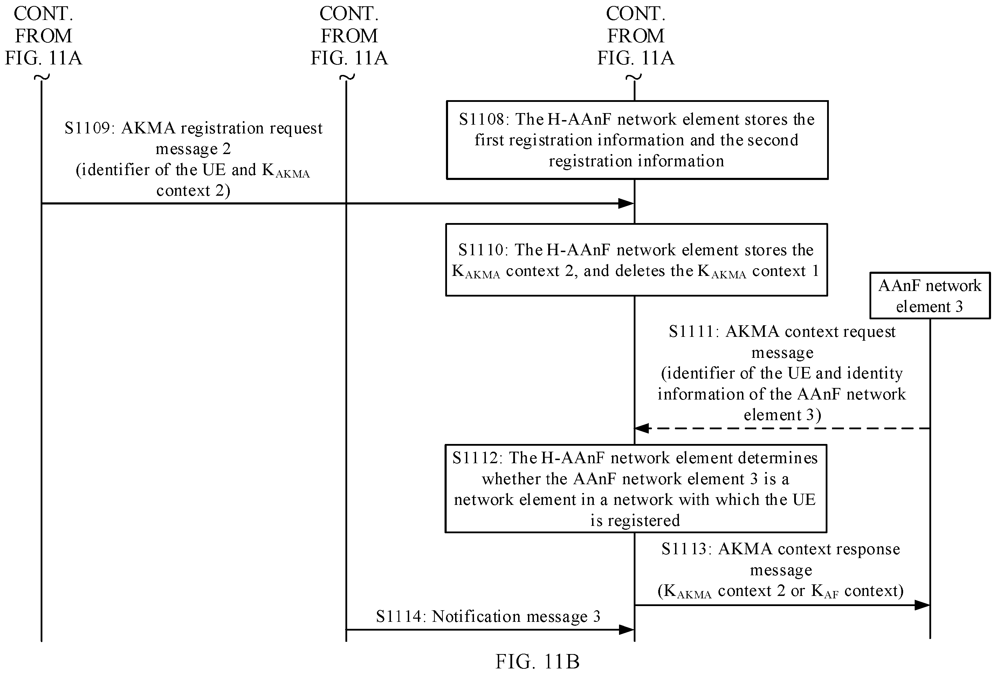

For example, FIG. 11A and FIG. 11B are a schematic flowchart 6 of a network information processing method according to an embodiment of this application. Different from Scenario 4, in Scenario 6, when a UDM network element senses that UE is registered with a first network and a second network, the UDM network element may provide first registration information and second registration information for an H-AAnF network element through one piece of signaling, so that the H-AAnF network element can store the first registration information and the second registration information.

Specifically, as shown in FIG. 11A and FIG. 11B, a procedure of the network information processing method is as follows:
S1101: First time of primary authentication procedure.
S1102: The UDM network element sends a notification message 1 to the H-AAnF network element. The H-AAnF network element receives the notification message 1 from the UDM network element.
S1103: The H-AAnF network element stores the first registration information.

For a specific implementation of S1101 to S1103, refer to the related descriptions of S1001 to S1003. Details are not described again.

S1104: The AUSF network element sends an AKMA registration request message 1 to the H-AAnF network element. The H-AAnF network element receives the AKMA registration request message 1 from the AUSF network element.

S1105: The H-AAnF network element stores a K_{AKMA} context 1.

For a specific implementation of S1104 and S1105, refer to the related descriptions of S904 and S905. Details are not described again.

S1106: Second time of primary authentication procedure.

In a process in which the UDM network element cooperates to complete a second time of primary authentication on the UE, the UDM network element may further sense a registration status of the UE, to determine that the UE is registered with the plurality of networks. A specific implementation principle is similar to that of S704. For understanding, refer to S704. Details are not described again. In this case, the UDM network element may obtain the first registration information and the second registration information.

S1107: The UDM network element sends a notification message 2 to the H-AAnF network element. The H-AAnF network element receives the notification message 2 from the UDM network element.

The notification message 2 may include an identifier of the UE, the first registration information, and the second registration information.

S1108: The H-AAnF network element stores the first registration information and the second registration information.

The H-AAnF network element may obtain the identifier of the UE, the first registration information, and the second registration information from the notification message 2. The H-AAnF network element may store the first registration information and the second registration information based on the identifier of the UE, and delete the first registration information stored in S1105. For example, the H-AAnF network element stores the first registration information and the second registration information in related information of the UE, and deletes the first registration information stored in S1105 from the related information of the UE.

S1109: The AUSF network element sends an AKMA registration request message 2 to the H-AAnF network element. The H-AAnF network element receives the AKMA registration request message 2 from the AUSF network element.

S1110: The H-AAnF network element stores a K_{AKMA} context 2, and deletes the K_{AKMA} context 1.

For a specific implementation of S1109 and S1110, refer to the related description of S909 and S910. Details are not described again.

S1111: An AAnF network element 3 sends an AKMA context request message to the H-AAnF network element. The H-AAnF network element receives the AKMA context request message from the AAnF network element 3.

S1112: The H-AAnF network element determines whether the AAnF network element 3 is a network element in a network with which the UE is registered.

S1113: The H-AAnF network element sends an AKMA context response message to the AAnF network element 3. The AAnF network element 3 receives the AKMA context response message from the H-AAnF network element.

S1114: The UDM network element sends a notification message 3 to the H-AAnF network element. The H-AAnF network element receives the notification message 3 from the UDM network element.

For a specific implementation of S1111 and S1112, refer to the related descriptions of S607 and S608. For a specific implementation of S1114, refer to the related descriptions of S914. Details are not described again.

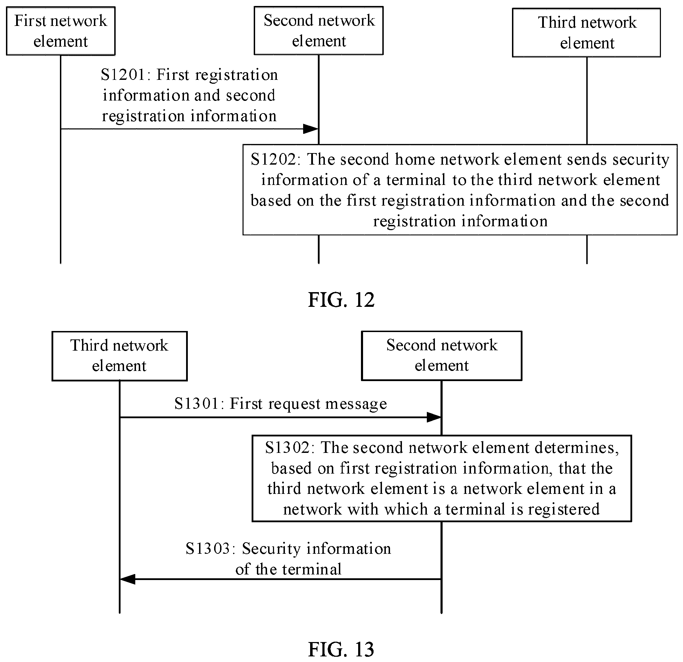

The foregoing describes in detail procedures of the network information processing method provided in embodiments of this application in various scenarios with reference to FIG. 5 to FIG. 11A and FIG. 11B. The following describes an overall procedure of the network information processing method with reference to FIG. 12 and FIG. 13.

FIG. 12 is a schematic flowchart 7 of a network information processing method according to an embodiment of this application. The method mainly relates to interaction between a first network element and a second network element. The first network element may be the foregoing AUSF network element/UDM network element, and the second network element may be the foregoing H-AAnF network element.

As shown in FIG. 12, a procedure of the method is as follows:
S1201: The first network element sends first registration information and second registration information to the second network element. The second network element receives the first registration information and the second registration information from the first network element.

A terminal (for example, the foregoing UE) may be separately registered with a first network (for example, the foregoing first network) and a second network (for example, the foregoing second network) through the first network element. The first network element may be an authentication service network element (for example, the foregoing AUSF network element) or a data management network element (for example, the foregoing UDM network element). The first network may be a home network of the terminal, and the second network may be a visited network of the terminal, to ensure service security in a home-roaming scenario. Alternatively, the first network may be a first visited network of the terminal, and the second network may be a second visited network of the terminal, to ensure service security in a multi-roaming scenario. The second network element may be a security anchor network element, for example, an AAnF network element, to be applied to an AKMA scenario. Alternatively, the second network element may be any other possible network element. This is not limited. The first registration information may be registration information of the terminal in the first network, for example, includes an identifier of the first network. The second registration information may be registration information of the terminal in the second network, for example, includes an identifier of the second network.

In a possible design solution, the first network element may send a first message to the second network element, and the second network element may receive the first message from the first network element. The first message may include the first registration information. In this way, the second network element stores the first registration information. Then, the first network element may send a second message to the second network element, and the second network element receives the second message from the first network element. The second message may include the second registration information. In this way, the second network element stores the second registration information, and does not delete the first registration information. In other words, when the terminal is registered with the first network and the second network, the second network element may store all registration information such as the first registration information and the second registration information, to ensure that the second network element can send security information of the terminal to a third network element based on the first registration information and the second registration information. For details, refer to the following related descriptions of S 1202. Details are not described again.

Optionally, the second network element may obtain registration indication information. The registration indication information indicates that the terminal is registered with a plurality of networks, and the plurality of networks may include the first network and the second network. The second network element may store the second registration information based on the registration indication information, and does not delete the first registration information. In other words, when the second network element obtains the registration indication information, the second network element stores all the registration information; or when the second network element does not obtain the registration indication information, the second network element stores latest information, for example, stores the second registration information, and deletes the first registration information, to save storage space. The registration indication information may be carried in the second message. In other words, the registration indication information is transmitted by reusing the second message, to reduce implementation difficulty. Alternatively, the registration indication information may be carried in any other possible message. This is not limited.

Optionally, the first network element may be an authentication service network element, the first message may be a first key registration request message (for example, the foregoing AKMA registration request message 1), and the second message may be a second key registration request message (for example, the foregoing AKMA registration request message 2). In other words, the authentication service network element may provide registration information by reusing a message in a key registration procedure, to reduce implementation difficulty. Alternatively, the first network element (for example, the foregoing UDM network element) may be a data management network element, the first message may be a first notification message (for example, the foregoing notification message 1), and the second message is a second notification message (for example, the foregoing notification message 2). In other words, the data management network element may provide registration information by reusing a message in a notification procedure, to reduce implementation difficulty. In addition, the authentication service network element or the data management network element may alternatively provide registration information by using a newly defined message. This is not limited.

It may be understood that for a specific implementation of the design solution, refer to the foregoing related descriptions of S601 to S606, S701 to S706, S901 to S910, and S1001 to S1010. Details are not described again.

In another possible design solution, the first network element may send a first message to the second network element, and the second network element receives the first message from the first network element. The first message includes the first registration information. In this way, the second network element stores the first registration information.

Then, the first network element may send a second message to the second network element, and the second network element receives the second message from the first network element. The second message includes the first registration information and the second registration information. In this way, the second network element stores the first registration information and the second registration information. It may be understood that when storing the first registration information and the second registration information, the second network element may delete previously stored information, for example, the first registration information, to save storage space; or may not delete previously stored information. This is not limited.

Optionally, the first network element may be an authentication service network element, the first message may be a first key registration request message, and the second message may be a second key registration request message. In other words, the authentication service network element may provide registration information by reusing a message in a key registration procedure, to reduce implementation difficulty. Alternatively, the first network element may be a data management network element, the first message may be a first notification message, and the second message is a second notification message. In other words, the data management network element may provide registration information by reusing a message in a notification procedure, to reduce implementation difficulty. In addition, the authentication service network element or the data management network element may alternatively provide registration information by using a newly defined message. This is not limited.

Optionally, before the first network element sends the first registration information and the second registration information to the second network element, the first network element may further determine that the terminal is registered with a plurality of networks.

The first network element may be an authentication service network element, and the authentication service network element may determine, based on information sent by the data management network element, that the terminal is registered with the plurality of networks. The information sent by the data management network element includes at least one of the following: registration indication information, the first registration information, or the second registration information, and the registration indication information indicates that the terminal is registered with the plurality of networks. It can be learned that the data management network element may choose to explicitly indicate, based on the registration indication information, that the terminal is registered with the plurality of networks, or may choose to implicitly indicate, based on the first registration information and/or the second registration information, that the terminal is registered with the plurality of networks. A specific indication manner to be selected may be determined based on an actual requirement, and is not limited.

For example, the authentication service network element may send an authentication obtaining request message for the terminal to the data management network element, to receive an authentication obtaining response message returned by the data management network element for the authentication obtaining request. The authentication obtaining response message includes at least one of the following: the registration indication information, the first registration information, or the second registration information. It can be learned that the authentication service network element may obtain, by reusing a message in an authentication procedure, for example, a primary authentication procedure, information sent by the data management network element, to reduce implementation difficulty.

Alternatively, the first network element may be a data management network element, and the data management network element may determine, based on a registration status of the terminal, that the terminal is registered with the plurality of networks. In other words, the data management network element may independently sense the registration status of the terminal. In this way, additional signaling interaction can be avoided, and communication overheads can be reduced.

It may be understood that for a specific implementation of the design solution, refer to the related descriptions of S801 to S806 and S1101 to S1110. Details are not described again.

S1202: The second network element sends the security information of the terminal to the third network element based on the first registration information and the second registration information.

The third network element (for example, the foregoing AAnF network element 3) may be a network element in a network with which the terminal is registered, and the network with which the terminal is registered may be a network element in the first network or the second network. The security information (for example, the foregoing K_{AKMA} context 2 or the foregoing K_{AF} context) of the terminal is used to perform security protection on data transmission between the terminal and an application server (for example, the foregoing AF). The network with which the terminal is registered may be used to support the data transmission between the terminal and the application server.

The second network element may determine, based on the first registration information and the second registration information, that the third network element is a network element in the network with which the terminal is registered. For example, the first registration information includes an identifier of the first network, and the second registration information includes an identifier of the second network. The second network element may determine whether an identifier of a network in which the third network element is located matches the identifier of the first network or the identifier of the second network. If the identifier of the network in which the third network element is located matches the identifier of the first network or the identifier of the second network, the second network element determines that the third network element is a network element in the network with which the terminal is registered. In this way, the second network element may send the security information of the terminal to the third network element.

Alternatively, the second network element may determine, based on the first registration information and the second registration information, the third network element in a network element in the network with which the terminal is registered. For example, the second network element may determine a device identifier set corresponding to the identifier of the first network or a device identifier set corresponding to the identifier of the second network, and a network element indicated by the device identifier set is a network element in the network with which the terminal is registered. The second network element may select a proper network element, for example, the third network element, from a network element with which the terminal is registered, to send the security information of the terminal to the third network element.

It can be learned that the second network element may provide the security information of the terminal only for a trusted network element, for example, a network element in the network with which the terminal is registered. In this way, an untrusted network element, for example, a network element not in the network with which the terminal is registered, may be prevented from obtaining the security information of the terminal, to reduce a risk of data exposure.

It may be understood that for a specific implementation of S1202, refer to the related descriptions of S607 to S609. Details are not described again.

In conclusion, the second network element may support a multi-registration scenario of the terminal through capability enhancement. For example, the second network element may send the security information of the terminal to the third network element based on the first registration information and the second registration information, to support a service between the terminal and the application server, for example, ensure that service data can be securely transmitted, and avoid a service failure.

With reference to the foregoing embodiment, in a possible design solution, when the terminal is deregistered from the first network, the first network element indicates the second network element to delete the first registration information, and the second network element deletes the first registration information based on an indication of the first network element; and/or when the terminal is deregistered from the second network, the first network element indicates the second network element to delete the second registration information, and the second network element deletes the second registration information based on an indication of the first network element. In this way, maintenance of redundant information can be avoided, storage space can be saved, and device running efficiency can be improved.

It may be understood that for a specific implementation of the design solution, refer to the related descriptions of S610 to S612 and S914. Details are not described again.

FIG. 13 is a schematic flowchart 8 of a network information processing method according to an embodiment of this application. The method mainly relates to interaction between a second network element and a first network element.

As shown in FIG. 13, a procedure of the method is as follows:
S1301: The second network element receives a first request message from the first network element.

The first request message (similar to the foregoing AKMA context request message, denoted as the foregoing AKMA context request message 1) may be used to request security information of a terminal (for example, the foregoing UE). The terminal may be registered with a first network. The security information (for example, the foregoing K_{AKMA} context 2 or the foregoing K_{AF} context) of the first terminal may be used to perform security protection on data transmission between the terminal and an application server (for example, the foregoing AF). The first network is used to support the data transmission between the terminal and the application server.

S1302: The second network element determines, based on first registration information, that a third network element is a network element in a network with which the terminal is registered.

The first registration information is registration information of the terminal in the first network, for example, includes an identifier of the first network. The network with which the terminal is registered may include the first network. The second network element may determine whether an identifier of a network in which the third network element is located matches the identifier of the first network. If the identifier of the network in which the third network element is located matches the identifier of the first network, the second network element determines that the third network element is a network element in the network with which the terminal is registered.

S1303: The second network element sends the security information of the terminal to the first network element.

It may be understood that for a specific implementation of S1301 to S1303, refer to the related descriptions of S607 to S609. Details are not described again.

With reference to the foregoing embodiment, in a possible design solution, when the terminal is registered with a second network, the second network element may further receive a second request message from a fourth network element. The fourth network element (for example, the foregoing AAnF network element 4) and the third network element may be different network elements, and the fourth network element may be a network element in the second network. The second request message (similar to the foregoing AKMA context request message, denoted as the foregoing AKMA context request message 2) and the first request message may be a same message, or may be different messages. This is not limited. The second request message may also be used to request the security information of the terminal. The second network is used to support the data transmission between the terminal and the application server. In this way, the second network element determines, based on the second registration information, that the second network element is a network element in the network with which the terminal is registered. The second registration information is registration information of the terminal in the second network, for example, includes an identifier of the second network. The network with which the terminal is registered may include the second network. The second network element may determine whether an identifier of a network in which the fourth network element is located matches the identifier of the second network. If the identifier of the network in which the fourth network element is located matches the identifier of the second network, the second network element determines that the fourth network element is a network element in the network with which the terminal is registered, to send the security information of the terminal to the fourth network element.

It may be understood that for a specific implementation of the design solution, refer to the related descriptions of S607 to S609. Details are not described again.

With reference to the foregoing embodiment, in a possible design solution, the second network element may further receive the first registration information and the second registration information from the first network element.

Specifically, the second network element may receive the first message from the first network element. The first message includes the first registration information. In this way, the second network element may store the first registration information. Then, the second network element may receive a second message from the first network element. The second message may include the second registration information. In this way, the second network element may store the second registration information, and does not delete the first registration information. For example, the second network element may obtain the second registration information. Registration indication information indicates that the terminal is registered with a plurality of networks, and the plurality of networks include the first network and the second network. The registration indication information may be carried in the second message. Alternatively, the registration indication information may be carried in any other possible message. This is not limited. The second network element may store the second registration information based on the registration indication information, and does not delete the first registration information. Alternatively, the second network element may receive the first message from the first network element. The first message includes the first registration information. In this way, the second network element may store the first registration information. Then, the second network element may receive a second message from the first network element. The second message may include the first registration information and the second registration information. In this way, the second network element may store the first registration information and the second registration information that are currently received. Optionally, the second network element may further delete the previously stored first registration information.

Optionally, the first network element may be an authentication service network element, the first message may be a first key registration request message, and the second message may be a second key registration request message. Alternatively, the first network element may be a data management network element, the first message may be a first notification message, and the second message may be a second notification message.

It may be understood that for a specific implementation of the design solution, refer to the related descriptions of S601 to S606, S701 to S706, S801 to S806, S901 to S910, S1001 to S1010, and S1101 to S1110. Details are not described again.

With reference to the foregoing embodiment, in a possible design solution, the second network element may further delete the first registration information based on an indication of the first network element when the terminal is deregistered from the first network; and/or the second network element may further delete the second registration information based on an indication of the first network element when the terminal is deregistered from the second network.

It may be understood that for a specific implementation of the design solution, refer to the related descriptions of S610 to S612 and S914. Details are not described again.

It may be further understood that, when the terminal is registered with the first network and the second network, the first network may be a home network of the terminal, and the second network may be a visited network of the terminal. Alternatively, the first network may be a first visited network of the terminal, and the second network may be a second visited network of the terminal.

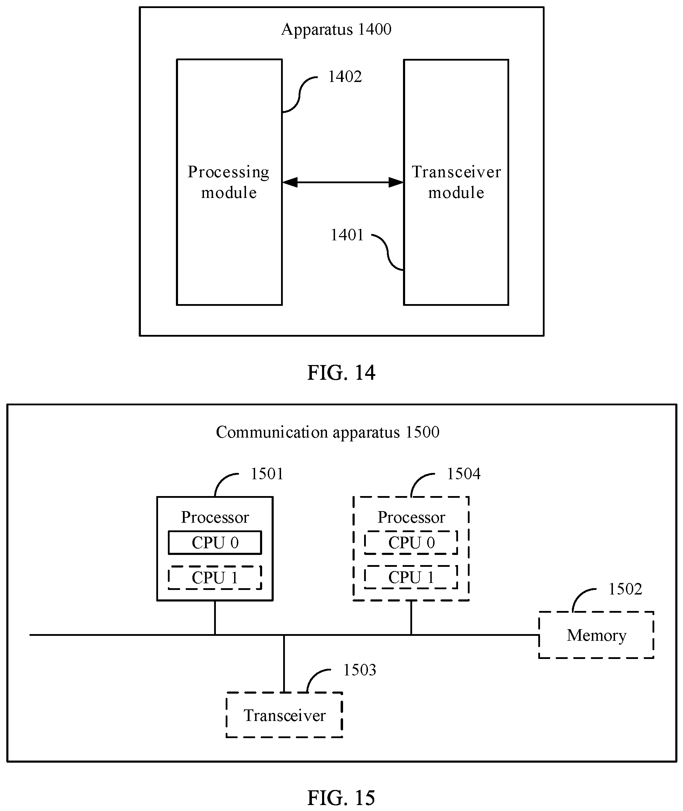

The foregoing describes the method provided in embodiments of this application in detail with reference to FIG. 6A and FIG. 6B to FIG. 13. With reference to FIG. 14, the following describes in detail a network information processing apparatus configured to perform the method provided in embodiments of this application.

For example, FIG. 14 is a diagram of a structure of a network information processing apparatus according to an embodiment of this application. As shown in FIG. 14, a network information processing apparatus 1400 includes a transceiver module 1401 and a processing module 1402. For ease of description, FIG. 14 shows only main components of the communication apparatus.

In some embodiments, the network information processing apparatus 1400 may be applied to the system shown in FIG. 5, and perform a function of the foregoing second network element or the foregoing H-AAnF network element. The transceiver module 1401 may be configured to perform a transceiver function of the apparatus 1400, and the processing module 1402 may be configured to perform another function of the apparatus 1400 other than the transceiver function.

For example, the transceiver module 1401 is configured to receive first registration information and second registration information from a first network element in a home network when a terminal is separately registered with a first network and a second network through the first network element in the home network. The processing module 1402 is configured to control, based on the first registration information and the second registration information, the transceiver module 1401 to send security information of the terminal to a third network element. The first registration information is registration information of the terminal in the first network, and the second registration information is registration information of the terminal in the second network. The third network element is a network element in the first network or the second network, the security information of the terminal is used to perform security protection on data transmission between the terminal and an application server, and the first network or the second network is used to support the data transmission between the terminal and the application server.

In a possible design solution, the transceiver module 1401 is further configured to receive a first message from the first network element. The first message includes the first registration information. The processing module 1402 is further configured to store the first registration information. The transceiver module 1401 is further configured to receive a second message from the first network element. The second message includes the second registration information. The processing module 1402 is further configured to: store the second registration information, and not delete the first registration information.

Optionally, the processing module 1402 is further configured to: obtain registration indication information, store the second registration information based on the registration indication information, and not delete the first registration information. The registration indication information indicates that the terminal is registered with a plurality of networks, and the plurality of networks include the first network and the second network.

Further, the registration indication information is carried in the second message.

Optionally, the first network element is an authentication service network element, the first message is a first key registration request message, and the second message is a second key registration request message. Alternatively, the first network element is a data management network element, the first message is a first notification message, and the second message is a second notification message.

In a possible design solution, the transceiver module 1401 is further configured to receive a second message from the first network element. The second message includes the first registration information and the second registration information. The processing module 1402 is further configured to store the first registration information and the second registration information.

Optionally, the first network element is an authentication service network element, and the second message is a second key registration request message. Alternatively, the first network element is a data management network element, and the second message is a second notification message.

In a possible design solution, the processing module 1402 is further configured to determine, based on the first registration information and the second registration information, that the third network element is a network element in a network with which the terminal is registered. For example, the first registration information includes an identifier of the first network, and the second registration information includes an identifier of the second network. The processing module 1402 is further configured to determine whether an identifier of a network in which the third network element is located matches the identifier of the first network or the identifier of the second network. If the identifier of the network in which the third network element is located matches the identifier of the first network or the identifier of the second network, the processing module 1402 is further configured to determine that the third network element is a network element in the network with which the terminal is registered. In addition, the processing module 1402 is further configured to control the transceiver module 1401 to send the security information of the terminal to the third network element.

Alternatively, the processing module 1402 is further configured to determine, based on the first registration information and the second registration information, the third network element in a network element in the network with which the terminal is registered, to control the transceiver module 1401 to send the security information of the terminal to the third network element.

In a possible design solution, the processing module 1402 is further configured to delete the first registration information based on an indication of the first network element when the terminal is deregistered from the first network; and/or the processing module 1402 is further configured to delete the second registration information based on an indication of the first network element when the terminal is deregistered from the second network.

In a possible design solution, the first network is a home network of the terminal, and the second network is a visited network of the terminal. Alternatively, the first network is a first visited network of the terminal, and the second network is a second visited network of the terminal.

In a possible design solution, the apparatus 1400 is a security anchor network element.

Optionally, the transceiver module 1401 may include a sending module (not shown in FIG. 14) and a receiving module (not shown in FIG. 14). The sending module is configured to implement a sending function of the apparatus 1400, and the receiving module is configured to implement a receiving function of the apparatus 1400.

Optionally, the apparatus 1400 may further include a storage module (not shown in FIG. 14), and the storage module stores a program or instructions. When the processing module 1402 executes the program or the instructions, the apparatus 1400 is enabled to perform the method shown in FIG. 6A and FIG. 6B to FIG. 12.

It can be understood that the apparatus 1400 may be a network device, may be a chip (system) or another part or component that may be disposed in the network device, or may be an apparatus including the network device. This is not limited in this application.

In addition, for a technical effect of the apparatus 1400, refer to the technical effect of the method shown in FIG. 6A and FIG. 6B to FIG. 12. Details are not described again.

In some other embodiments, the network information processing apparatus 1400 may be applied to the system shown in FIG. 5, and perform a function of the first network element or the AUSF network element/UDM network element. The transceiver module 1401 may be configured to perform a transceiver function of the apparatus 1400, and the processing module 1402 may be configured to perform another function of the apparatus 1400 other than the transceiver function.

For example, the processing module 1402 is configured to determine that a terminal is registered with a plurality of networks, and the transceiver module 1401 is configured to send first registration information and second registration information to a second network element. The plurality of networks include a first network and a second network, the first registration information is registration information of the terminal in the first network, the second registration information is registration information of the terminal in the second network, and the first registration information and the second registration information are used by the second network element to provide security protection for the terminal.

In a possible design solution, the apparatus 1400 is an authentication service network element, and the processing module 1402 is further configured to determine, based on information sent by a data management network element, that the terminal is registered with a plurality of networks. The information sent by the data management network element includes at least one of the following: registration indication information, the first registration information, or the second registration information, and the registration indication information indicates that the terminal is registered with the plurality of networks.

In a possible design solution, the method in the second aspect may further include: the transceiver module 1401 is further configured to send an authentication obtaining request message for the terminal to the data management network element, to receive an authentication obtaining response message returned by the data management network element for the authentication obtaining request. The authentication obtaining response message includes at least one of the following: the registration indication information, the first registration information, or the second registration information.

In a possible design solution, the apparatus 1400 is a data management network element, and the processing module 1402 is further configured to determine, based on a registration status of the terminal, that the terminal is registered with the plurality of networks.

In a possible design solution, the transceiver module 1401 is further configured to send a first message to the second network element. The first message includes the first registration information. Then, the transceiver module 1401 is further configured to send a second message to the second network element. The second message includes the second registration information.

In a possible design solution, the transceiver module 1401 is further configured to send a first message to the second network element. The first message includes the first registration information. Then, the transceiver module 1401 is further configured to send a second message to the second network element. The second message includes the first registration information and the second registration information.

Optionally, the apparatus 1400 is an authentication service network element, the first message is a first key registration request message, and the second message is a second key registration request message. Alternatively, the apparatus 1400 is a data management network element, the first message is a first notification message, and the second message is a second notification message.

In a possible design solution, the processing module 1402 is further configured to: when the terminal is deregistered from the first network, control the transceiver module 1401 to indicate the second network element to delete the first registration information; and/or the processing module 1402 is further configured to: when the terminal is deregistered from the second network, control the transceiver module 1401 to indicate the second network element to delete the second registration information.

In a possible design solution, the first network is a home network of the terminal, and the second network is a visited network of the terminal; or the first network is a first visited network of the terminal, and the second network is a second visited network of the terminal.

In a possible design solution, the second network element is a security anchor network element.

Optionally, the transceiver module 1401 may include a sending module (not shown in FIG. 14) and a receiving module (not shown in FIG. 14). The sending module is configured to implement a sending function of the apparatus 1400, and the receiving module is configured to implement a receiving function of the apparatus 1400.

Optionally, the apparatus 1400 may further include a storage module (not shown in FIG. 14), and the storage module stores a program or instructions. When the processing module 1402 executes the program or the instructions, the apparatus 1400 is enabled to perform the method shown in FIG. 6A and FIG. 6B to FIG. 12.

It can be understood that the apparatus 1400 may be a network device, may be a chip (system) or another part or component that may be disposed in the network device, or may be an apparatus including the network device. This is not limited in this application.

In still some other embodiments, the network information processing apparatus 1400 may be applied to the system shown in FIG. 5, and perform a function of the first network element or the AUSF network element/UDM network element. The transceiver module 1401 may be configured to perform a transceiver function of the apparatus 1400, and the processing module 1402 may be configured to perform another function of the apparatus 1400 other than the transceiver function.

For example, the transceiver module 1401 is configured to receive a first request message from a third network element when a terminal is registered with a first network. The first request message is used to request security information of the terminal, the security information of the terminal is used to perform security protection on data transmission between the terminal and an application server, and the first network is used to support data transmission between the terminal and the application server. The processing module 1402 is configured to determine, based on first registration information, that the third network element is a network element in a network with which the terminal is registered, to control the transceiver module 1401 to send security information of the terminal to the third network element. The third registration information is registration information of the terminal in the first network.

In a possible design solution, the transceiver module 1401 is further configured to receive a second request message from a fourth network element when the terminal is registered with a second network. The second request message is used to request the security information of the terminal, and the second network is used to support the data transmission between the terminal and the application server. The processing module 1402 is further configured to determine, based on second registration information, that the fourth network element is a network element in the network with which the terminal is registered, to control the transceiver module 1401 to send the security information of the terminal to the fourth network element. The second registration information is registration information of the terminal in the second network.

In a possible design solution, the transceiver module 1401 is further configured to receive the first registration information and the second registration information from the first network element.

Optionally, the transceiver module 1401 is further configured to receive a first message from the first network element. The first message includes the first registration information. The processing module 1402 is further configured to store the first registration information. Then, the transceiver module 1401 is further configured to receive a second message from the first network element. The second message includes the second registration information. In this way, the processing module 1402 is further configured to: store the second registration information, and not delete the first registration information.

Further, the processing module 1402 is further configured to: obtain registration indication information, store the second registration information based on the registration indication information, and not delete the first registration information. The registration indication information indicates that the terminal is registered with a plurality of networks, and the plurality of networks include the first network and the second network.

Further, the registration indication information is carried in the second message.

In a possible design solution, the transceiver module 1401 is further configured to receive a first message from the first network element. The first message includes the first registration information. The processing module 1402 is further configured to store the first registration information. Then, the transceiver module 1401 is further configured to receive a second message from the first network element. The second message includes the first registration information and the second registration information. In this way, the processing module 1402 is further configured to store the first registration information and the second registration information.

Optionally, the first network element is an authentication service network element, the first message is a first key registration request message, and the second message is a second key registration request message. Alternatively, the first network element is a data management network element, the first message is a first notification message, and the second message is a second notification message.

In a possible design solution, the processing module 1402 is further configured to delete the first registration information based on an indication of the first network element when the terminal is deregistered from the first network; and/or the processing module 1402 is further configured to delete the second registration information based on an indication of the first network element when the terminal is deregistered from the second network.

In a possible design solution, the first network is a home network of the terminal, and the second network is a visited network of the terminal. Alternatively, the first network is a first visited network of the terminal, and the second network is a second visited network of the terminal.

In a possible design solution, the apparatus 1400 is a security anchor network element.

Optionally, the transceiver module 1401 may include a sending module (not shown in FIG. 14) and a receiving module (not shown in FIG. 14). The sending module is configured to implement a sending function of the apparatus 1400, and the receiving module is configured to implement a receiving function of the apparatus 1400.

Optionally, the apparatus 1400 may further include a storage module (not shown in FIG. 14), and the storage module stores a program or instructions. When the processing module 1402 executes the program or the instructions, the apparatus 1400 is enabled to perform the method shown in FIG. 6A and FIG. 6B to FIG. 12.

It can be understood that the apparatus 1400 may be a network device, may be a chip (system) or another part or component that may be disposed in the network device, or may be an apparatus including the network device. This is not limited in this application.

In addition, for a technical effect of the apparatus 1400, refer to the technical effect of the method shown in FIG. 6A and FIG. 6B to FIG. 11A and FIG. 11B and FIG. 13. Details are not described again.

For example, FIG. 15 is a diagram of a structure of a communication apparatus according to an embodiment of this application. The communication apparatus may be a network device, or may be a chip (system) or another part or component that can be disposed in the network device. As shown in FIG. 15, the communication apparatus 1500 may include a processor 1501. Optionally, the communication apparatus 1500 may further include a memory 1502 and/or a transceiver 1503. The processor 1501 is coupled to the memory 1502 and the transceiver 1503. For example, the processor 1501 may be connected to the memory 1502 and the transceiver 1503 through a communication bus.

The following describes constituent parts of the communication apparatus 1500 in detail with reference to FIG. 15.

The processor 1501 is a control center of the communication apparatus 1500, and may be one processor, or may be a collective term of a plurality of processing elements. For example, the processor 1501 is one or more central processing units (central processing unit, CPU), or may be an application-specific integrated circuit (application-specific integrated circuit, ASIC), or may be one or more integrated circuits configured to implement embodiments of this application, for example, one or more microprocessors (digital signal processor, DSP), or one or more field programmable gate arrays (field programmable gate array, FPGA).

Optionally, the processor 1501 may perform various functions of the communication apparatus 1500 by running or executing a software program stored in the memory 1502 and invoking data stored in the memory 1502, for example, perform the method shown in FIG. 6A and FIG. 6B to FIG. 13.

In a specific implementation, in an embodiment, the processor 1501 may include one or more CPUs, for example, a CPU 0 and a CPU 1 shown in FIG. 15.

In a specific implementation, in an embodiment, the communication apparatus 1500 may alternatively include a plurality of processors, for example, the processor 1501 and a processor 1504 shown in FIG. 15. Each of the processors may be a single-core processor (single-CPU), or may be a multi-core processor (multi-CPU). The processor herein may be one or more devices, circuits, and/or processing cores configured to process data (for example, computer program instructions).

The memory 1502 is configured to store the software program for performing the solutions in this application, and the processor 1501 controls execution of the software program. For a specific implementation, refer to the foregoing method embodiments. Details are not described herein again.

Optionally, the memory 1502 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium capable of being for carrying or storing expected program code in a form of instructions or a data structure and capable of being accessed by a computer, but is not limited thereto. The memory 1502 may be integrated with the processor 1501, or may exist independently, and is coupled to the processor 1501 through an interface circuit port (not shown in FIG. 15) of the communication apparatus 1500. This is not specifically limited in this embodiment of this application.

The transceiver 1503 is configured to communicate with another communication apparatus. For example, the communication apparatus 1500 is the terminal, and the transceiver 1503 may be configured to: communicate with a network device or communicate with another terminal device. For another example, the communication apparatus 1500 is a network device, and the transceiver 1503 may be configured to: communicate with a terminal or communicate with another network device.

Optionally, the transceiver 1503 may include a receiver and a transmitter (not separately shown in FIG. 15). The receiver is configured to implement a receiving function, and the transmitter is configured to implement a sending function.

Optionally, the transceiver 1503 may be integrated with the processor 1501, or may exist independently, and is coupled to the processor 1501 through an interface circuit (not shown in FIG. 15) of the communication apparatus 1500. This is not specifically limited in this embodiment of this application.

It may be understood that a structure of the communication apparatus 1500 shown in FIG. 15 does not constitute a limitation on the communication apparatus. An actual communication apparatus may include more or fewer components than those shown in the figure, combine some components, or have different component arrangements.

In addition, for technical effects of the communication apparatus 1500, refer to the technical effects of the method in the foregoing method embodiments. Details are not described herein again.

An embodiment of this application provides a communication system. The communication system includes a first network element that performs the foregoing method and a second network element that performs the foregoing method.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including any combination of singular items (pieces) or plural items (pieces). For example, at least one item (piece) of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network information processing method, wherein the method comprises:
when a terminal is separately registered with a first network and a second network through a first network element in a home network, receiving, by a second network element in the home network, first registration information and second registration information from the first network element, wherein the first registration information is registration information of the terminal in the first network, and the second registration information is registration information of the terminal in the second network; and
sending, by the second network element, security information of the terminal to a third network element based on the first registration information and the second registration information, wherein the third network element is a network element in a network with which the terminal is registered, the network with which the terminal is registered is the first network or the second network, the security information is used to perform security protection on data transmission between the terminal and an application server, and the network with which the terminal is registered is used to support the data transmission between the terminal and the application server.

2. The method according to claim 1, wherein the receiving, by a second network element in the home network, first registration information and second registration information from the first network element comprises:
receiving, by the second network element, a first message from the first network element, wherein the first message comprises the first registration information;
storing, by the second network element, the first registration information;
receiving, by the second network element, a second message from the first network element, wherein the second message comprises the second registration information; and
storing, by the second network element, the second registration information, and skipping deleting the first registration information.

3. The method according to claim 2, wherein the method further comprises:
obtaining, by the second network element, registration indication information, wherein the registration indication information indicates that the terminal is registered with a plurality of networks, and the plurality of networks comprise the first network and the second network; and
correspondingly, the storing, by the second network element, the second registration information, and skipping deleting the first registration information comprises:
storing, by the second network element, the second registration information based on the registration indication information, and skipping deleting the first registration information.

4. The method according to claim 3, wherein the registration indication information is carried in the second message.

5. The method according to any one of claims 2 to 4, wherein
the first network element is an authentication service network element, the first message is a first key registration request message, and the second message is a second key registration request message; or
the first network element is a data management network element, the first message is a first notification message, and the second message is a second notification message.

6. The method according to claim 1, wherein the receiving, by a second network element in the home network, first registration information and second registration information from the first network element comprises:
receiving, by the second network element, a second message from the first network element, wherein the second message comprises the first registration information and the second registration information; and
storing, by the second network element, the first registration information and the second registration information.

7. The method according to claim 6, wherein
the first network element is an authentication service network element, and the second message is a second key registration request message; or
the first network element is a data management network element, and the second message is a second notification message.

8. The method according to any one of claims 1 to 7, wherein the sending, by the second network element, security information of the terminal to a third network element based on the first registration information and the second registration information comprises:
determining, by the second network element based on the first registration information and the second registration information, that the third network element is a network element in the network with which the terminal is registered; and
sending, by the second network element, the security information to the third network element.

9. The method according to claim 8, wherein the first registration information comprises an identifier of the first network, the second registration information comprises an identifier of the second network, and the determining, by the second network element based on the first registration information and the second registration information, that the third network element is a network element in the network with which the terminal is registered comprises:
determining, by the second network element, whether an identifier of a network in which the third network element is located matches the identifier of the first network or the identifier of the second network; and
if the identifier of the network in which the third network element is located matches the identifier of the first network or the identifier of the second network, determining, by the second network element, that the third network element is a network element in the network with which the terminal is registered.

10. The method according to any one of claims 1 to 9, wherein the method further comprises:
deleting, by the second network element, the first registration information based on an indication of the first network element when the terminal is deregistered from the first network; and/or
deleting, by the second network element, the second registration information based on an indication of the first network element when the terminal is deregistered from the second network.

11. The method according to any one of claims 1 to 10, wherein
the first network is a home network of the terminal, and the second network is a visited network of the terminal; or
the first network is a first visited network of the terminal, and the second network is a second visited network of the terminal.

12. The method according to any one of claims 1 to 11, wherein
the second network element is a security anchor network element.

13. A network information processing method, wherein the method comprises:
determining, by a first network element in a home network, that a terminal is registered with a plurality of networks; and
sending, by the first network element, first registration information and second registration information to a second network element in the home network, wherein the plurality of networks comprise a first network and a second network, the first registration information is registration information of a terminal in the first network, the second registration information is registration information of the terminal in the second network, and the first registration information and the second registration information are used by the second network element to provide security protection for the terminal.

14. The method according to claim 13, wherein the first network element is an authentication service network element, and the determining, by a first network element in a home network, that a terminal is registered with a plurality of networks comprises:
determining, by the authentication service network element based on information sent by a data management network element, that the terminal is registered with the plurality of networks, wherein the information sent by the data management network element comprises at least one of the following: registration indication information, the first registration information, or the second registration information, and the registration indication information indicates that the terminal is registered with the plurality of networks.

15. The method according to claim 14, wherein the method further comprises:
sending, by the authentication service network element, an authentication obtaining request message for the terminal to the data management network element; and
receiving, by the authentication service network element, an authentication obtaining response message returned by the data management network element for the authentication obtaining request, wherein the authentication obtaining response message comprises at least one of the following: the registration indication information, the first registration information, or the second registration information.

16. The method according to claim 13, wherein the first network element is a data management network element, and the determining, by a first network element in a home network, that a terminal is registered with a plurality of networks comprises:
determining, by the data management network element based on a registration status of the terminal, that the terminal is registered with the plurality of networks.

17. The method according to claim 13, wherein the sending, by the first network element, first registration information and second registration information to a second network element in the home network comprises:
sending, by the first network element, a first message to the second network element, wherein the first message comprises the first registration information; and
sending, by the first network element, a second message to the second network element, wherein the second message comprises the second registration information.

18. The method according to claim 17, wherein
the first network element is an authentication service network element, the first message is a first key registration request message, and the second message is a second key registration request message; or
the first network element is a data management network element, the first message is a first notification message, and the second message is a second notification message.

19. The method according to claim 13, wherein the sending, by the first network element, first registration information and second registration information to a second network element in the home network comprises:
sending, by the first network element, a second message to the second network element, wherein the second message comprises the first registration information and the second registration information.

20. The method according to claim 19, wherein
the first network element is an authentication service network element, and the second message is a second key registration request message; or
the first network element is a data management network element, and the second message is a second notification message.

21. The method according to any one of claims 13 to 20, wherein the method further comprises:
when the terminal is deregistered from the first network, indicating, by the first network element, the second network element to delete the first registration information; and/or
when the terminal is deregistered from the second network, indicating, by the first network element, the second network element to delete the second registration information.

22. The method according to any one of claims 13 to 21, wherein
the first network is a home network of the terminal, and the second network is a visited network of the terminal; or
the first network is a first visited network of the terminal, and the second network is a second visited network of the terminal.

23. The method according to any one of claims 13 to 22, wherein
the second network element is a security anchor network element.

24. A network information processing method, wherein the method comprises:
receiving, by a second network element in a home network, a first request message from a third network element when a terminal is registered with a first network, wherein the first request message is used to request security information of the terminal, the security information of the terminal is used to perform security protection on data transmission between the terminal and an application server, and the first network is used to support data transmission between the terminal and the application server; and
determining, by the second network element based on first registration information, that the third network element is a network element in a network with which the terminal is registered, and sending the security information of the terminal to the third network element, wherein the network with which the terminal is registered comprises the first network, and the first registration information is registration information of the terminal in the first network.

25. The method according to claim 24, wherein the method further comprises:
receiving, by the second network element, a second request message from a fourth network element when the terminal is registered with a second network, wherein the second request message is used to request the security information of the terminal, and the second network is used to support the data transmission between the terminal and the application server; and
determining, by the second network element based on second registration information, that the fourth network element is a network element in the network with which the terminal is registered, and sending the security information of the terminal to the fourth network element, wherein the network with which the terminal is registered comprises the second network, and the second registration information is registration information of the terminal in the second network.

26. The method according to claim 24 or 25, wherein the method further comprises:
receiving, by the second network element, the first registration information and the second registration information from a first network element in the home network.

27. The method according to claim 26, wherein the receiving, by the second network element, the first registration information and the second registration information from a first network element in the home network comprises:
receiving, by the second network element, a first message from the first network element, wherein the first message comprises the first registration information;
storing, by the second network element, the first registration information;
receiving, by the second network element, a second message from the first network element, wherein the second message comprises the second registration information; and
storing, by the second network element, the second registration information, and skipping deleting the first registration information.

28. The method according to claim 27, wherein the method further comprises:
obtaining, by the second network element, registration indication information, wherein the registration indication information indicates that the terminal is registered with a plurality of networks, and the plurality of networks comprise the first network and the second network; and
correspondingly, the storing, by the second network element, the second registration information, and skipping deleting the first registration information comprises:
storing, by the second network element, the second registration information based on the registration indication information, and skipping deleting the first registration information.

29. The method according to claim 28, wherein the registration indication information is carried in the second message.

30. The method according to any one of claims 27 to 29, wherein
the first network element is an authentication service network element, the first message is a first key registration request message, and the second message is a second key registration request message; or
the first network element is a data management network element, the first message is a first notification message, and the second message is a second notification message.

31. The method according to claim 26, wherein the receiving, by the second network element, the first registration information and the second registration information from a first network element in the home network comprises:
receiving, by the second network element, a second message from the first network element, wherein the second message comprises the first registration information and the second registration information; and
storing, by the second network element, the first registration information and the second registration information.

32. The method according to claim 31, wherein the first network element is an authentication service network element, and the second message is a second key registration request message; or
the first network element is a data management network element, and the second message is a second notification message.

33. The method according to any one of claims 24 to 32, wherein the method further comprises:
deleting, by the second network element, the first registration information based on an indication of the first network element when the terminal is deregistered from the first network; and/or
deleting, by the second network element, the second registration information based on an indication of the first network element when the terminal is deregistered from the second network.

34. The method according to any one of claims 24 to 33, wherein the first network is a home network of the terminal, and the second network is a visited network of the terminal; or
the first network is a first visited network of the terminal, and the second network is a second visited network of the terminal.

35. The method according to any one of claims 24 to 34, wherein the second network element is a security anchor network element.

36. A network information processing method, wherein the method comprises:
when a terminal is separately registered with a first network and a second network through a first network element in a home network, sending, by the first network element, first registration information and second registration information to a second network element in the home network, and receiving, by the second network element, the first registration information and the second registration information from the first network element; and
sending, by the second network element, security information of the terminal to a third network element based on the first registration information and the second registration information, wherein the first registration information is registration information of the terminal in the first network, the second registration information is registration information of the terminal in the second network, the third network element is a network element in a network with which the terminal is registered, the network with which the terminal is registered is a network element in the first network or the second network, the security information of the terminal is used to perform security protection on data transmission between the terminal and an application server, and the network with which the terminal is registered is used to support the data transmission between the terminal and the application server.

37. The method according to claim 36, wherein the sending, by the first network element, first registration information and second registration information to a second network element in the home network, and receiving, by the second network element, the first registration information and the second registration information from the first network element comprises:
sending, by the first network element, a first message to the second network element, and receiving, by the second network element, the first message from the first network element, wherein the first message comprises the first registration information;
storing, by the second network element, the first registration information;
sending, by the first network element, a second message to the second network element, and receiving, by the second network element, the second message from the first network element, wherein the second message comprises the second registration information; and
storing, by the second network element, the second registration information, and skipping deleting the first registration information.

38. The method according to claim 37, wherein the method further comprises:
obtaining, by the second network element, registration indication information, wherein the registration indication information indicates that the terminal is registered with a plurality of networks, and the plurality of networks comprise the first network and the second network; and
correspondingly, the storing, by the second network element, the second registration information, and skipping deleting the first registration information comprises:
storing, by the second network element, the second registration information based on the registration indication information, and skipping deleting the first registration information.

39. The method according to claim 38, wherein the registration indication information is carried in the second message.

40. The method according to any one of claims 37 to 39, wherein
the first network element is an authentication service network element, the first message is a first key registration request message, and the second message is a second key registration request message; or
the first network element is a data management network element, the first message is a first notification message, and the second message is a second notification message.

41. The method according to claim 36, wherein the sending, by the first network element, first registration information and second registration information to a second network element in the home network, and receiving, by the second network element, the first registration information and the second registration information from the first network element comprises:
sending, by the first network element, a second message to the second network element, and receiving, by the second network element, the second message from the first network element, wherein the second message comprises the first registration information and the second registration information; and
storing, by the second network element, the first registration information and the second registration information.

42. The method according to claim 41, wherein
the first network element is an authentication service network element, and the second message is a second key registration request message; or
the first network element is a data management network element, and the second message is a second notification message.

43. The method according to any one of claims 36 to 42, wherein before the sending, by the first network element, first registration information and second registration information to a second network element in the home network, the method further comprises:
determining, by the first network element, that the terminal is registered with the plurality of networks, wherein the plurality of networks comprise the first network and the second network.

44. The method according to claim 43, wherein the first network element is an authentication service network element, and the determining, by the first network element, that the terminal is registered with the plurality of networks comprises:
determining, by the authentication service network element based on information sent by a data management network element, that the terminal is registered with the plurality of networks, wherein the information sent by the data management network element comprises at least one of the following: the registration indication information, the first registration information, or the second registration information, and the registration indication information indicates that the terminal is registered with the plurality of networks.

45. The method according to claim 44, wherein the method further comprises:
sending, by the authentication service network element, an authentication obtaining request message for the terminal to the data management network element, and receiving, by the authentication service network element, an authentication obtaining response message returned by the data management network element for the authentication obtaining request, wherein the authentication obtaining response message comprises at least one of the following: the registration indication information, the first registration information, or the second registration information.

46. The method according to claim 43, wherein the first network element is a data management network element, and the determining, by the first network element, that the terminal is registered with the plurality of networks comprises:
determining, by the data management network element based on a registration status of the terminal, that the terminal is registered with the plurality of networks.

47. The method according to any one of claims 36 to 46, wherein the sending, by the second network element, security information of the terminal to a third network element based on the first registration information and the second registration information comprises:
determining, by the second network element based on the first registration information and the second registration information, that the third network element is a network element in the network with which the terminal is registered, and sending the security information of the terminal to the third network element.

48. The method according to any one of claims 36 to 47, wherein the sending, by the second network element, security information of the terminal to a third network element based on the first registration information and the second registration information comprises:
determining, by the second network element based on the first registration information and the second registration information, the third network from the network element in the network with which the terminal is registered, and sending the security information of the terminal to the third network element.

49. The method according to any one of claims 36 to 48, wherein the method further comprises:
when the terminal is deregistered from the first network, indicating, by the first network element, the second network element to delete the first registration information, and deleting, by the second network element, the first registration information based on an indication of the first network element; and/or
when the terminal is deregistered from the second network, indicating, by the first network element, the second network element to delete the second registration information, and deleting, by the second network element, the second registration information based on an indication of the first network element.

50. The method according to any one of claims 36 to 49, wherein
the first network is a home network of the terminal, and the second network is a visited network of the terminal; or
the first network is a first visited network of the terminal, and the second network is a second visited network of the terminal.

51. The method according to any one of claims 36 to 50, wherein the second network element is a security anchor network element.

52. A network information processing apparatus, wherein the apparatus comprises: a module, configured to perform the method according to any one of claims 1 to 12.

53. A network information processing apparatus, wherein the apparatus comprises: a module, configured to perform the method according to any one of claims 13 to 23.

54. A network information processing apparatus, wherein the apparatus comprises: a module, configured to perform the method according to any one of claims 24 to 35.

55. A communication apparatus, wherein the communication apparatus comprises a processor and a memory, the memory is configured to store computer instructions, and when the processor executes the instructions, the communication apparatus performs the method according to any one of claims 1 to 51.

56. A communication system, wherein the communication system comprises a first network element and a second network element, the second network element is configured to perform the method according to any one of claims 1 to 12 and claims 24 to 35, and the first network element is configured to perform the method according to any one of claims 13 to 23.

57. A computer-readable storage medium, wherein the computer-readable storage medium comprises a computer program or instructions, and when the computer program or the instructions are run on a computer, the computer is enabled to perform the method according to any one of claims 1 to 51.
